(19) Europäisches Patentamt
European Patent Office
Office européen des brevets

(11) **EP 4 668 997 A1**

(12) **EUROPEAN PATENT APPLICATION**
published in accordance with Art. 153(4) EPC

(43) Date of publication:
**24.12.2025 Bulletin 2025/52**

(21) Application number: **24769971.3**

(22) Date of filing: **13.03.2024**

(51) International Patent Classification (IPC):
*H04W 72/54* (2023.01)

(52) Cooperative Patent Classification (CPC):
**H04W 72/1263; H04W 72/54**

(86) International application number:
**PCT/CN2024/081498**

(87) International publication number:
**WO 2024/188280 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2023 CN 202310293241**

(71) Applicant: **Huawei Technologies Co., Ltd.
Shenzhen, Guangdong 518129 (CN)**

(72) Inventors:
• **LI, Kuikui
  Shenzhen, Guangdong 518129 (CN)**
• **ZENG, Qinghai
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND APPARATUS**

(57)    This application relates to the wireless communication field, and discloses a communication method and apparatus, to determine an appropriate quality of service profile. The method includes: receiving a plurality of pieces of candidate quality of service configuration information from a first network element in a core network, where any one of the plurality of pieces of candidate quality of service configuration information includes a parameter related to power consumption of a terminal; determining target quality of service configuration information from the plurality of pieces of candidate quality of service configuration information based on a current network status and the parameter related to the power consumption of the terminal; and sending first indication information indicating a parameter related to the target quality of service configuration information.

FIG. 4

## Description

This application claims priority to Chinese Patent Application No. 202310293241.9, filed with the China National Intellectual Property Administration on March 14, 2023 and entitled "COMMUNICATION METHOD AND APPARATUS", which is incorporated herein by reference in its entirety.

## TECHNICAL FIELD

This application relates to the wireless communication field, and in particular, to a communication method and apparatus.

## BACKGROUND

In a communication system, a radio access network (radio access network, RAN) node may obtain a quality of service (quality of service, QoS) profile (QoS profile), and perform mapping from a QoS flow to a data radio bearer (data radio bearer, DRB) based on the QoS profile. Then, data transmission may be performed between a terminal and the RAN node based on the QoS flow, to ensure quality of data transmission. However, with development of communication technologies, a communication scenario becomes increasingly complex, and the foregoing method is inapplicable to a current increasingly complex communication scenario.

## SUMMARY

This application provides a communication method and apparatus, to determine a proper QoS profile.

To achieve the foregoing objective, the following technical solutions are used in this application.

According to a first aspect, a communication method is provided. The method may be performed by a radio access network node; or may be performed by a module, for example, a chip, a chip system, or a circuit, used in a radio access network node; or may be implemented by a logical node, a logical module, or software that can implement all or some of functions of a radio access network node. This is not limited herein. For ease of description, an example in which the method is performed by the radio access network node is used below for description. The method includes: receiving a plurality of pieces of candidate quality of service configuration information from a first network element in a core network, where any one of the plurality of pieces of candidate quality of service configuration information includes a parameter related to power consumption of a terminal; determining target quality of service configuration information from the plurality of pieces of candidate quality of service configuration information based on a current network status and the parameter related to the power consumption of the terminal; and sending first indication information, where the first indication information indicates a parameter related to the target quality of service configuration information.

According to the method provided in the first aspect, the radio access network node may obtain the plurality of pieces of candidate quality of service configuration information from the first network element in the core network, and determine the target quality of service configuration information from the plurality of pieces of candidate quality of service configuration information based on the current network status and the parameter that is in the candidate quality of service configuration information and that is related to the power consumption of the terminal. When determining the target quality of service configuration information, the radio access network node further considers the parameter related to the power consumption of the terminal, for example, the power consumption or energy consumption of the terminal, to control the power consumption or the energy consumption of the terminal. This can avoid overheat of the terminal or impact on standby time of the terminal, to improve user experience. Therefore, the method is applicable to a communication scenario in which a requirement is imposed on power consumption or energy consumption of a terminal. In addition, the radio access network node further sends the first indication information, to indicate the parameter related to the target quality of service configuration information. In this way, a device (for example, the terminal and/or a cloud) that receives the first indication information may determine, based on the indication of the radio access network node, information associated with the parameter, for example, service parameter information corresponding to the parameter, so that the terminal and/or the cloud can adjust the service parameter information in response to a change in an air interface network status and/or a change in the requirement on the power consumption or the energy consumption of the terminal. The service parameter information may include any one of the following: a task split point, a bit rate, a code rate, a frame rate, or a resolution.

In a possible implementation, the parameter related to the target quality of service configuration information has a correspondence with at least one of the task split point, the bit rate, the code rate, the frame rate, or the resolution.

According to the foregoing possible implementation, at least one of the task split point, the bit rate, the code rate, the frame rate, or the resolution may be indicated by the parameter related to the target quality of service configuration information.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

According to the foregoing possible implementation, when determining the target quality of service configuration information, the radio access network node may consider one or more of the computing power consumption of the terminal, the total power consumption of the terminal, the computing energy consumption of the terminal, the total energy consumption of the terminal, or the transmission power consumption of the terminal, to control the power consumption or the energy consumption of the terminal. This can avoid overheat of the terminal or impact on standby time of the terminal, to improve user experience.

In a possible implementation, the any one piece of candidate quality of service configuration information further includes at least one of the following: an identifier of the candidate quality of service configuration information, task computing accuracy, a guaranteed flow bit rate, a packet delay budget, a packet error rate, a guaranteed bit rate, or a guaranteed transmission data size.

According to the foregoing possible implementation, if the candidate quality of service configuration information includes the identifier of the candidate quality of service configuration information, different candidate quality of service configuration information may be distinguished by using the identifier. If the candidate quality of service configuration information includes the task computing accuracy, when determining the target quality of service configuration information, the radio access network node may consider the task computing accuracy, to ensure accuracy of a task execution result. If the candidate quality of service configuration information includes the guaranteed flow bit rate, when determining the target quality of service configuration information, the radio access network node may determine, based on the guaranteed flow bit rate, whether the candidate quality of service configuration information matches the current network status. If the candidate quality of service configuration information includes the packet delay budget, when determining the target quality of service configuration information, the radio access network node may determine, based on the packet delay budget, whether the candidate quality of service configuration information matches the current network status. If the candidate quality of service configuration information includes the packet error rate, when determining the target quality of service configuration information, the radio access network node may determine, based on the packet error rate, whether the candidate quality of service configuration information matches the current network status. If the candidate quality of service configuration information includes the guaranteed bit rate, when determining the target quality of service configuration information, the radio access network node may determine, based on the guaranteed bit rate, whether the candidate quality of service configuration information matches the current network status. If the candidate quality of service configuration information includes the guaranteed transmission data size, when determining the target quality of service configuration information, the radio access network node may determine, based on the guaranteed transmission data size, whether the candidate quality of service configuration information matches the current network status.

In a possible implementation, the first indication information includes at least one of the following: an identifier of the target quality of service configuration information, a parameter that is included in the target quality of service configuration information and that is related to the power consumption of the terminal, task computing accuracy, a guaranteed flow bit rate, a packet delay budget, a packet error rate, a guaranteed bit rate, or a guaranteed transmission data size.

According to the foregoing possible implementation, the first indication information may include one or more of the identifier of the target quality of service configuration information, the parameter that is included in the target quality of service configuration information and that is related to the power consumption of the terminal, the task computing accuracy, the guaranteed flow bit rate, the packet delay budget, the packet error rate, the guaranteed bit rate, or the guaranteed transmission data size, to indicate the parameter related to the target quality of service configuration information.

In a possible implementation, sending the first indication information includes: sending first data to a second network element in the core network, where a tunneling protocol-user plane header of the first data includes the first indication information.

According to the foregoing possible implementation, the first indication information may be carried in the tunneling protocol-user plane header of the first data, to quickly send the first indication information.

In a possible implementation, sending the first indication information includes: sending the first indication information to the terminal, where the first indication information is carried in a radio resource control message or a media access control control element.

According to the foregoing possible implementation, the first indication information may be sent to the terminal by using the radio resource control message or the media access control control element. In this way, the radio access network node can quickly indicate, to the terminal through an air interface, the parameter related to the target quality of service configuration information. The terminal may respond to a change in an air interface network status in a timely manner, and then determine, based on the parameter related to the target quality of service configuration information, service parameter information that matches a current network status. For example, the terminal may determine, in a timely manner based on the parameter related to the target quality of service configuration information, a task split point that matches the current network status. In this way, successful transmission of intermediate data obtained by the terminal by performing a task based on the task split point does not need to be ensured by consuming a large quantity of air interface transmission resources, so that a quantity of terminals that access the radio access network node is increased. It can be understood that the task split point may further match a power consumption or energy consumption requirement of the terminal, to avoid high power consumption or energy consumption when the terminal performs the task based on the task split point. It can be understood that the task split point may further match task computing accuracy, to avoid low precision of the task or an inaccurate execution result.

In a possible implementation, the method is applied to a central unit included in the radio access network node, and sending the first indication information includes: sending the first indication information to a distributed unit included in the radio access network node; or the method is applied to a distributed unit included in the radio access network node, and sending the first indication information includes: sending the first indication information to a central unit included in the radio access network node.

According to the foregoing possible implementation, in a scenario in which the central unit and the distributed unit are separated, a party that obtains the first indication information may send the first indication information to a party that does not obtain the first indication information.

In a possible implementation, the current network status includes at least one of the following: a guaranteed flow bit rate of a current network, a packet delay budget of a current network, a packet error rate of a current network, a guaranteed bit rate of a current network, a guaranteed transmission data size of a current network, channel state information of a current network, buffer status report information of a current network, or congestion status information of a current network.

According to the foregoing possible implementation, the target quality of service configuration information may be determined from the plurality of pieces of candidate quality of service configuration information based on one or more of the guaranteed flow bit rate of the current network, the packet delay budget of the current network, the packet error rate of the current network, the guaranteed bit rate of the current network, the guaranteed transmission data size of the current network, the channel state information of the current network, the buffer status report information of the current network, or the congestion status information of the current network.

According to a second aspect, a communication method is provided. The method may be performed by a terminal; or may be performed by a module, for example, a chip, a chip system, or a circuit, used in a terminal; or may be implemented by a logical node, a logical module, or software that can implement all or some of functions of a terminal. This is not limited herein. For ease of description, an example in which the method is performed by the terminal is used below for description. The method includes: sending information about a first session to a first network element in a core network, where the information about the first session indicates that the first session corresponds to a plurality of pieces of candidate quality of service configuration information; receiving first indication information from a radio access network node; and determining, based on the first indication information, a parameter related to target quality of service configuration information, where the target quality of service configuration information includes a parameter related to power consumption of the terminal, and the target quality of service configuration information is included in the plurality of pieces of candidate quality of service configuration information.

According to the method provided in the second aspect, the terminal may indicate, to the first network element by using the information about the first session, that the first session can correspond to the plurality of pieces of candidate quality of service configuration information. In addition, the terminal may further receive the first indication information, and determine, based on the first indication information, the parameter related to the target quality of service configuration information. In this way, the terminal can determine, based on an indication of the radio access network node, information associated with the parameter, for example, service parameter information corresponding to the parameter. The service parameter information may include any one of the following: a task split point, a bit rate, a code rate, a frame rate, or a resolution.

In a possible implementation, the method further includes: determining at least one of the task split point, the bit rate, the code rate, the frame rate, or the resolution that corresponds to the parameter related to the target quality of service configuration information.

According to the foregoing possible implementation, the terminal may determine at least one of the task split point, the bit rate, the code rate, the frame rate, or the resolution based on the parameter related to the target quality of service configuration information, and then process data based on the determined information.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

According to the foregoing possible implementation, the target quality of service configuration information may include one or more of the computing power consumption of the terminal, the total power consumption of the terminal, the computing energy consumption of the terminal, the total energy consumption of the terminal, or the transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

According to the foregoing possible implementation, the target quality of service configuration information may further include one or more of the identifier of the target quality of service configuration information, the task computing accuracy, the guaranteed flow bit rate, the packet delay budget, the packet error rate, the guaranteed bit rate, or the guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

According to the foregoing possible implementation, the first indication information may indicate the parameter related to the target quality of service configuration information by using one or more of the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

In a possible implementation, the first indication information is carried in a radio resource control message or a media access control control element.

According to the foregoing possible implementation, the first indication information may be sent by using the radio resource control message or the media access control control element. In this way, the terminal can quickly receive, through an air interface, the parameter that is indicated by the radio access network node and that is related to the target quality of service configuration information. The terminal may respond to a change in an air interface network status in a timely manner, and then determine, based on the parameter related to the target quality of service configuration information, service parameter information that matches a current network status. For example, the terminal may determine, in a timely manner based on the parameter related to the target quality of service configuration information, a task split point that matches the current network status. In this way, successful transmission of intermediate data obtained by the terminal by performing a task based on the task split point does not need to be ensured by consuming a large quantity of air interface transmission resources, so that a quantity of terminals that access the radio access network node is increased. It can be understood that the task split point may further match a power consumption or energy consumption requirement of the terminal, to avoid high power consumption or energy consumption when the terminal performs the task based on the task split point. It can be understood that the task split point may further match task computing accuracy, to avoid low precision of the task or an inaccurate execution result.

In a possible implementation, the method further includes: sending second data, where the second data includes second indication information, and the second indication information indicates at least one of the task split point, the bit rate, the code rate, the frame rate, or the resolution that corresponds to the parameter related to the target quality of service configuration information.

According to the foregoing possible implementation, the terminal may further indicate, to another device, at least one of the task split point, the bit rate, the code rate, the frame rate, or the resolution that corresponds to the parameter related to the target quality of service configuration information.

According to a third aspect, a communication method is provided. The method may be performed by a first network element; or may be performed by a module, for example, a chip, a chip system, or a circuit, used in a first network element; or may be implemented by a logical node, a logical module, or software that can implement all or some of functions of a first network element. This is not limited herein. For ease of description, an example in which the method is performed by the first network element is used below for description. The method includes: receiving information about a first session from a terminal, where the information about the first session indicates that the first session corresponds to a plurality of pieces of candidate quality of service configuration information; obtaining the plurality of pieces of candidate quality of service configuration information, where any one of the plurality of pieces of candidate quality of service configuration information includes a parameter related to power consumption of the terminal; and sending the plurality of pieces of candidate quality of service configuration information to a radio access network node.

According to the method provided in the third aspect, the first network element may receive the information about the first session from the terminal, to determine that the first session can correspond to the plurality of pieces of candidate quality of service configuration information. The first network element may further obtain the plurality of pieces of candidate quality of service configuration information, and send the plurality of pieces of candidate quality of service configuration information to the radio access network node, so that the radio access network node determines target quality of service configuration information from the plurality of pieces of candidate quality of service configuration information.

**In** a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

According to the foregoing possible implementation, the any one of the plurality of pieces of candidate quality of service configuration information may include one or more of the computing power consumption of the terminal, the total power consumption of the terminal, the computing energy consumption of the terminal, the total energy consumption of the terminal, or the transmission power consumption of the terminal.

In a possible implementation, the any one piece of candidate quality of service configuration information further includes at least one of the following: an identifier of the candidate quality of service configuration information, task computing accuracy, a guaranteed flow bit rate, a packet delay budget, a packet error rate, a guaranteed bit rate, or a guaranteed transmission data size.

According to the foregoing possible implementation, the any one of the plurality of pieces of candidate quality of service configuration information may further include one or more of the identifier of the candidate quality of service configuration information, the task computing accuracy, the guaranteed flow bit rate, the packet delay budget, the packet error rate, the guaranteed bit rate, or the guaranteed transmission data size.

According to a fourth aspect, a communication method is provided. The method may be performed by a second network element; or may be performed by a module, for example, a chip, a chip system, or a circuit, used in a second network element; or may be implemented by a logical node, a logical module, or software that can implement all or some of functions of a second network element. This is not limited herein. For ease of description, an example in which the method is performed by the second network element is used below for description. The method includes: receiving first data from a radio access network node, where a tunneling protocol-user plane header of the first data includes first indication information, and the first indication information indicates a parameter related to target quality of service configuration information; and sending third indication information, where the third indication information indicates the parameter related to the target quality of service configuration information.

According to the method provided in the fourth aspect, the first indication information may be carried in the tunneling protocol-user plane header of the first data, so that the second network element can obtain the first indication information as soon as possible, and indicate the parameter related to the target quality of service configuration information to another device.

In a possible implementation, the target quality of service configuration information includes a parameter related to power consumption of a terminal.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

According to the foregoing possible implementation, the target quality of service configuration information may include one or more of the computing power consumption of the terminal, the total power consumption of the terminal, the computing energy consumption of the terminal, the total energy consumption of the terminal, or the transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

According to the foregoing possible implementation, the first indication information may include one or more of the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size, to indicate the parameter related to the target quality of service configuration information.

According to a fifth aspect, a communication method is provided. The method may be performed by a computing node; or may be performed by a module, for example, a chip, a chip system, or a circuit, used in a computing node; or may be implemented by a logical node, a logical module, or software that can implement all or some of functions of a computing node. This is not limited herein. For ease of description, an example in which the method is performed by the computing node is used below for description. The method includes: receiving first indication information from a radio access network node; and determining, based on the first indication information, a parameter related to target quality of service configuration information, where the target quality of service configuration information includes a parameter related to power consumption of a terminal.

According to the method provided in the fifth aspect, the computing node may receive the first indication information, and determine, based on the first indication information, the parameter related to the target quality of service configuration information. In this way, the computing node can determine, based on an indication of the radio access network node, information associated with the parameter, for example, service parameter information corresponding to the parameter. The service parameter information may include any one of the following: a task split point, a bit rate, a code rate, a frame rate, or a resolution.

In a possible implementation, the method further includes: determining at least one of the task split point, the bit rate, the code rate, the frame rate, or the resolution that corresponds to the parameter related to the target quality of service configuration information.

According to the foregoing possible implementation, the computing node may determine at least one of the task split point, the bit rate, the code rate, the frame rate, or the resolution based on the parameter related to the target quality of service configuration information, and then process data based on the determined information.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

According to the foregoing possible implementation, the target quality of service configuration information may include one or more of the computing power consumption of the terminal, the total power consumption of the terminal, the computing energy consumption of the terminal, the total energy consumption of the terminal, or the transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

According to the foregoing possible implementation, the first indication information may indicate the parameter related to the target quality of service configuration information by using one or more of the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

In a possible implementation, the method further includes: sending third data, where the third data includes fourth indication information, and the fourth indication information indicates at least one of the task split point, the bit rate, the code rate, the frame rate, or the resolution that corresponds to the parameter related to the target quality of service configuration information.

According to the foregoing possible implementation, the computing node may further indicate, to another device, at least one of the task split point, the bit rate, the code rate, the frame rate, or the resolution that corresponds to the parameter related to the target quality of service configuration information.

According to a sixth aspect, a communication apparatus is provided, to implement the foregoing methods. The communication apparatus may be the radio access network node in the first aspect, or an apparatus including the radio access network node, or a module, for example, a chip, a chip system, or a circuit, in the radio access network node in the first aspect, or a logical node, a logical module, or software that can implement some or all of functions of the radio access network node. Alternatively, the communication apparatus may be the terminal in the second aspect, or an apparatus including the terminal, or a module, for example, a chip, a chip system, or a circuit, in the terminal in the second aspect, or a logical node, a logical module, or software that can implement some or all of functions of the terminal. Alternatively, the communication apparatus may be the first network element in the third aspect, or an apparatus including the first network element, or a module, for example, a chip, a chip system, or a circuit, in the first network element in the third aspect, or a logical node, a logical module, or software that can implement some or all of functions of the first network element. Alternatively, the communication apparatus may be the second network element in the fourth aspect, or an apparatus including the second network element, or a module, for example, a chip, a chip system, or a circuit, in the second network element in the fourth aspect, or a logical node, a logical module, or software that can implement some or all of functions of the second network element. Alternatively, the communication apparatus may be the computing node in the fifth aspect, or an apparatus including the computing node, or a module, for example, a chip, a chip system, or a circuit, in the computing node in the fifth aspect, or a logical node, a logical module, or software that can implement some or all of functions of the computing node. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the sixth aspect, in a possible implementation, the communication apparatus may include an interface module. The interface module may also be referred to as an interface unit, and is configured to implement a sending function and/or a receiving function in any one of the foregoing aspects or the possible implementations of the foregoing aspects. The interface module may include an interface circuit, a transceiver device, a transceiver, or a communication interface.

With reference to the sixth aspect, in a possible implementation, the interface module includes a sending module and a receiving module that are respectively configured to implement a sending function and a receiving function in any one of the foregoing aspects or the possible implementations of the foregoing aspects.

With reference to the sixth aspect, in a possible implementation, the communication apparatus further includes a processing module. The processing module may be configured to implement a processing function in any one of the foregoing aspects or the possible implementations of the foregoing aspects. The processing module may be, for example, a processor.

According to a seventh aspect, a communication apparatus is provided, and includes a processor. The processor is configured to: after being coupled to a memory and reading instructions in the memory, perform, according to the instructions, the method according to any one of the foregoing aspects. The communication apparatus may be the radio access network node in the first aspect, or an apparatus including the radio access network node, or a module, for example, a chip, a chip system, or a circuit, in the radio access network node in the first aspect, or a logical node, a logical module, or software that can implement some or all of functions of the radio access network node. Alternatively, the communication apparatus may be the terminal in the second aspect, or an apparatus including the terminal, or a module, for example, a chip, a chip system, or a circuit, in the terminal in the second aspect, or a logical node, a logical module, or software that can implement some or all of functions of the terminal. Alternatively, the communication apparatus may be the first network element in the third aspect, or an apparatus including the first network element, or a module, for example, a chip, a chip system, or a circuit, in the first network element in the third aspect, or a logical node, a logical module, or software that can implement some or all of functions of the first network element. Alternatively, the communication apparatus may be the second network element in the fourth aspect, or an apparatus including the second network element, or a module, for example, a chip, a chip system, or a circuit, in the second network element in the fourth aspect, or a logical node, a logical module, or software that can implement some or all of functions of the second network element. Alternatively, the communication apparatus may be the computing node in the fifth aspect, or an apparatus including the computing node, or a module, for example, a chip, a chip system, or a circuit, in the computing node in the fifth aspect, or a logical node, a logical module, or software that can implement some or all of functions of the computing node.

With reference to the seventh aspect, in a possible implementation, the communication apparatus further includes a memory. The memory is configured to store necessary program instructions and data.

With reference to the seventh aspect, in a possible implementation, the communication apparatus is a chip or a chip system. Optionally, when the communication apparatus is a chip system, the communication apparatus may include a chip; or may include a chip and another discrete component.

According to an eighth aspect, a communication apparatus is provided, and includes a processor and an interface circuit. The interface circuit is configured to receive a computer program or instructions, and transmit the computer program or instructions to the processor. The processor is configured to execute the computer program or instructions, to enable the communication apparatus to perform the method according to any one of the foregoing aspects. The communication apparatus may be the radio access network node in the first aspect, or an apparatus including the radio access network node, or a module, for example, a chip, a chip system, or a circuit, in the radio access network node in the first aspect, or a logical node, a logical module, or software that can implement some or all of functions of the radio access network node. Alternatively, the communication apparatus may be the terminal in the second aspect, or an apparatus including the terminal, or a module, for example, a chip, a chip system, or a circuit, in the terminal in the second aspect, or a logical node, a logical module, or software that can implement some or all of functions of the terminal. Alternatively, the communication apparatus may be the first network element in the third aspect, or an apparatus including the first network element, or a module, for example, a chip, a chip system, or a circuit, in the first network element in the third aspect, or a logical node, a logical module, or software that can implement some or all of functions of the first network element. Alternatively, the communication apparatus may be the second network element in the fourth aspect, or an apparatus including the second network element, or a module, for example, a chip, a chip system, or a circuit, in the second network element in the fourth aspect, or a logical node, a logical module, or software that can implement some or all of functions of the second network element. Alternatively, the communication apparatus may be the computing node in the fifth aspect, or an apparatus including the computing node, or a module, for example, a chip, a chip system, or a circuit, in the computing node in the fifth aspect, or a logical node, a logical module, or software that can implement some or all of functions of the computing node.

With reference to the eighth aspect, in a possible implementation, the communication apparatus is a chip or a chip system. Optionally, when the communication apparatus is a chip system, the communication apparatus may include a chip; or may include a chip and another discrete component.

According to a ninth aspect, a computer-readable storage medium is provided. The computer-readable storage medium stores instructions. When the instructions are run on a computer, the computer is enabled to perform the method according to any one of the foregoing aspects.

According to a tenth aspect, a computer program product including instructions is provided. When the computer program product is run on a computer, the computer is enabled to perform the method according to any one of the foregoing aspects.

According to an eleventh aspect, a communication system is provided. The communication system includes a plurality of devices among the following: a radio access network node for performing the method in the first aspect, a terminal for performing the method in the second aspect, a first network element for performing the method in the third aspect, and a computing node for performing the method in the fifth aspect.

With reference to the eleventh aspect, in a possible implementation, the communication system further includes a second network element for performing the method in the fourth aspect.

For technical effects achieved in any one of the possible implementations of the sixth aspect to the eleventh aspect, refer to the technical effects achieved in any one of the first aspect to the fifth aspect or different possible implementations of the first aspect to the fifth aspect. Details are not described herein again.

It can be understood that the solutions in the foregoing aspects may be combined if the solutions are not contradictory.

## BRIEF DESCRIPTION OF DRAWINGS

FIG. 1A is a diagram of transmission of downlink data between layers;

FIG. 1B is a diagram of a central unit (central unit, CU) and a distributed unit (distributed unit, DU);

FIG. 1C is a first diagram of a RAN node;

FIG. 1D is a second diagram of a RAN node;

FIG. 1E is a diagram of an architecture of a core network;

FIG. 1F is a diagram of terminal-cloud collaboration for an uplink service;

FIG. 1G is a diagram of a deep neural network (deep neural network, DNN) model;

FIG. 2 is a diagram of an architecture of a communication system according to this application;

FIG. 3 is a diagram of a hardware structure of a communication apparatus according to this application;

FIG. 4 is a schematic flowchart of a communication method according to this application; and

FIG. 5 is a diagram of a structure of a communication apparatus according to this application.

## DESCRIPTION OF EMBODIMENTS

Before technical solutions of this application are described, related technical terms in this application are described. It can be understood that the descriptions are intended to make this application easier to understand, but should not be construed as a limitation on the protection scope claimed in this application.

1. Terminal

The terminal in this application is a device with a wireless transceiver function and a computing function. The terminal may be deployed on land, including an indoor device, an outdoor device, a handheld device, or a vehicle-mounted device; or may be deployed on water (for example, on a ship); or may be deployed in the air (for example, on an airplane, a balloon, or a satellite). The terminal may also be referred to as a terminal device. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

By way of example but not limitation, the terminal in this application may be a wearable device. The wearable device may also be referred to as a wearable intelligent device, and is a general term for a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement complete or partial functions without relying on smartphones, for example, smart watches or smart glasses; and include devices that focus only on one type of application function and that need to be used together with other devices such as smartphones, for example, various smart bands or smart jewelry for monitoring physical signs.

In this application, the terminal may alternatively be a terminal in an internet of things (internet of things, IoT) system. IoT is an important part of future information technology development. A main technical feature of the IoT is to connect an object to a network by using a communication technology, to implement an intelligent network of human-computer interconnection and thing-to-thing interconnection. The terminal in this application may be a terminal in machine type communication (machine type communication, MTC). The terminal in this application may be a vehicle-mounted module, a vehicle-mounted assembly, a vehicle-mounted component, a vehicle-mounted chip, or a vehicle-mounted unit that is disposed in a vehicle as one or more components or units. The vehicle may implement a method in this application through the built-in vehicle-mounted module, vehicle-mounted assembly, vehicle-mounted component, vehicle-mounted chip, or vehicle-mounted unit.

2. RAN node

The RAN node in this application may be any device with a wireless transceiver function, and may provide a wireless access service for a terminal. The RAN node may include but is not limited to an evolved NodeB (NodeB or eNB or e-NodeB, evolved NodeB) in long term evolution (long term evolution, LTE), an evolved NodeB (next-generation eNB, ng-eNB) in next-generation LTE, a gNodeB (gNodeB or gNB) or a transmission and reception point (transmission and receiving point/transmission and reception point, TRP) in new radio (new radio, NR), a future evolved base station of the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, a balloon station, or the like. A plurality of base stations may support networks using a same technology mentioned above, or may support networks using different technologies mentioned above. The base station may include one or more co-site or non-co-site TRPs. The RAN node may alternatively be at least one of a radio controller, a CU, a DU, a central unit control plane (CU control plane, CU-CP) node, a central unit user plane (CU user plane, CU-UP) node, a baseband processing unit (baseband unit, BBU), a remote radio unit (remote radio unit, RRU), or the like in a cloud radio access network (cloud radio access network, CRAN) scenario. An example in which the RAN node is a base station is used below for description. A plurality of RAN nodes may be base stations of a same type, or may be base stations of different types. The base station may communicate with the terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

3. Protocol layer

In this application, a terminal and a RAN node may communicate with each other through a protocol layer. The protocol layer may include a control plane (control panel, CP) protocol layer and a user plane (user panel, UP) protocol layer. The control plane protocol layer may include a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, and other protocol layers. The user plane protocol layer may include a PDCP layer, an RLC layer, a MAC layer, a physical layer, and other protocol layers. Optionally, a service data adaptation protocol (service data adaptation protocol, SDAP) layer may be further included above the PDCP layer.

The user plane protocol layer is used below as an example for description. User plane data between the RAN node and the terminal may pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Based on a transmission direction of the user plane data, each layer is further divided into a sending part and a receiving part. Downlink data transmission is used below as an example for description.

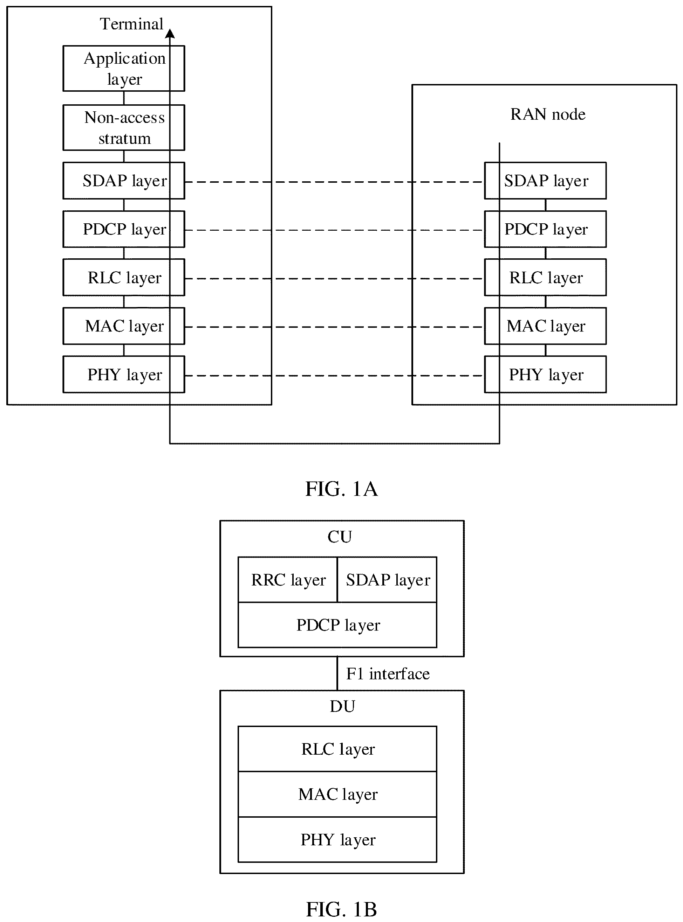

FIG. 1A is a diagram of transmission of downlink data between layers. An arrow in FIG. 1A indicates a transmission direction of the downlink data. To be specific, after obtaining the downlink data from an upper layer, an SDAP layer of the RAN node sequentially transmits the downlink data to a PDCP layer, an RLC layer, and a MAC layer, then the MAC layer generates a transport block, and then wireless transmission is performed through a physical layer, to transmit the transport block to a physical layer of the terminal. Subsequently, the physical layer of the terminal delivers the downlink data to an upper layer. It can be understood that data may be correspondingly encapsulated at each layer. For example, data received by a layer from an upper layer of the layer is considered as a service data unit (service data unit, SDU) of the layer and is encapsulated by the layer into a protocol data unit (protocol data unit, PDU), and then the protocol data unit is transmitted to a next layer.

Optionally, in addition to the access stratum, a protocol layer of the terminal further includes an application layer (app layer) and a non-access stratum (non-access stratum, NAS). The application layer may be configured to provide a service for an application installed on the terminal. For example, downlink data received by the terminal may be sequentially transmitted from the physical layer to the application layer, and then provided by the application layer for the application. For another example, the application layer may obtain data generated by an application, and sequentially deliver the data to the physical layer, and the data is sent to another communication apparatus through the physical layer. The non-access stratum may be configured to forward user data, for example, forward, to the SDAP layer, uplink data received from the application layer, or forward, to the application layer, downlink data received from the SDAP layer.

4. CU and DU

In this application, a RAN node may include a CU and a DU. To be specific, functions of the RAN node may be split, some functions of the RAN node are deployed on the CU, and a remaining function of the RAN node is deployed on the DU. Signaling generated by the CU may be sent to a terminal through the DU, or signaling generated by a terminal may be sent to the CU through the DU.

A quantity of CUs or DUs included in the RAN node is not limited in this application. For example, the RAN node may include one CU and a plurality of DUs. The plurality of DUs may be controlled by one CU in a centralized manner. An interface between the CU and the DU may be referred to as an F1 interface. The interface between the CU and the DU may be further divided into a control plane interface (F1-C) and a user plane interface (F1-U).

In this application, the CU and the DU may also be divided based on a protocol layer of a wireless network. For example, a PDCP layer and a protocol layer above the PDCP layer are deployed on the CU, and a protocol layer below the PDCP layer is deployed on the DU. Specifically, refer to FIG. 1B.

It can be understood that the foregoing is merely an example of dividing the CU and the CU based on protocol layers. During specific application, there may alternatively be another division form. This is not limited.

In a possible implementation, the CU may be further split into a CU-CP node and a CU-UP node, and the CU-CP node and the CU-UP node may be coupled to the DU to jointly perform a function of the RAN node.

5. RAN intelligent controller (RAN intelligent controller, RIC)

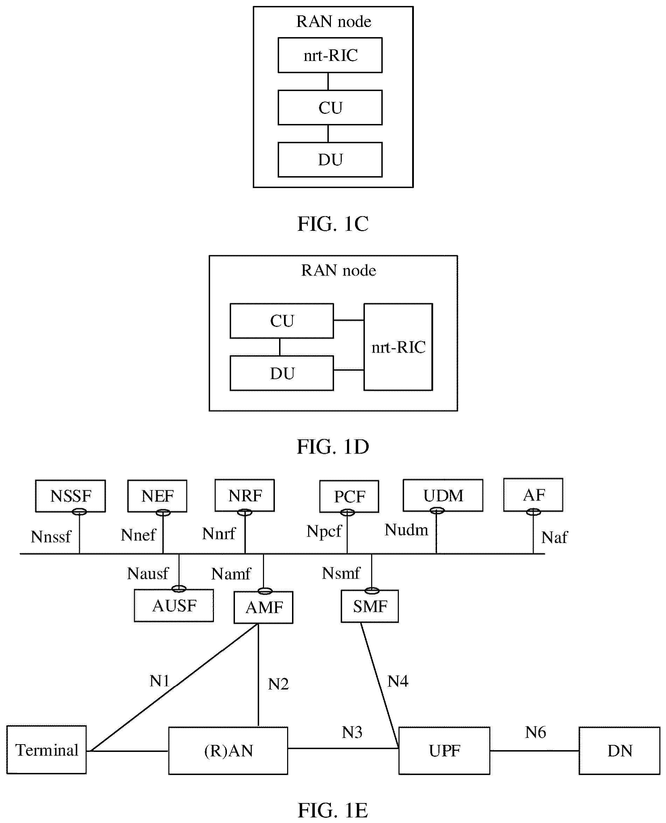

In an open radio access network (open radio access network, ORAN) architecture, a RAN node includes an RIC (for example, a near-real-time RIC (near-real-time RIC, nrt-RIC)), a CU, and a DU. To be specific, functions of the RAN node are split, and the functions of the RAN node are separately deployed on the RIC, the CU, and the DU. For example, in the ORAN architecture, the RAN node may be shown in FIG. 1C or FIG. 1D. In FIG. 1C or FIG. 1D, the CU may include an RRC layer and a PDCP layer, the DU may include an RLC layer, a MAC layer, and a physical layer, and the nrt-RIC may implement a function of an application layer. Optionally, the nrt-RIC may further implement a related function of AI.

6. Core network (core network, CN)

In this application, the core network may be configured to manage a terminal and provide a gateway for communicating with an external network. The core network may include one or more core network elements.

For example, FIG. 1E shows an architecture of the core network by using a network service architecture of a fifth-generation (5th generation, 5G) mobile communication system as an example. In FIG. 1E, the core network includes a user plane function (user plane function, UPF) network element, a data network (data network, DN), an access management function (access management function, AMF) network element, a session management function (session management function, SMF) network element, an authentication server function (authentication server function, AUSF) network element, a policy control function (policy control function, PCF) network element, an application function (application function, AF) network element, a network slice selection function (network slice selection function, NSSF) network element, a unified data management (unified data management, UDM) network element, a network exposure function (network exposure function, NEF) network element, and a network repository function (NF repository function, NRF) network element. A RAN node may communicate with the AMF network element and the UPF network element, and the terminal may communicate with the AMF network element. The terminal and the RAN node may communicate with each other by using an air interface technology.

In FIG. 1E, N1 is a reference point between the terminal and the AMF network element, N2 is a reference point between the RAN node and the AMF network element, N3 is a reference point between the RAN node and the UPF network element, N4 is a reference point between the SMF network element and the UPF network element, N6 is a reference point between the UPF network element and the DN, Namf is a service-based interface provided by the AMF network element, Nsmf is a service-based interface provided by the SMF network element, Nausf is a service-based interface provided by the AUSF network element, Nnssf is a service-based interface provided by the NSSF network element, Nnef is a service-based interface provided by the NEF network element, Nnrf is a service-based interface provided by the NRF network element, Npcf is a service-based interface provided by the PCF network element, Nudm is a service-based interface provided by the UDM network element, and Naf is a service-based interface provided by the AF network element.

7. Bit rate (bit rate)

The bit rate is a quantity of bits (bits) of a digital signal that are transmitted in a digital channel per second, and indicates a quantity of bits needed for representing encoded (or compressed) audio/video data per second. It can be understood that a higher bit rate indicates better audio/video quality but a larger encoded (or compressed) file. Common encoding schemes include variable bit rate (variable bit rate, VBR), average bit rate (average bit rate, ABR), and constant bit rate (constant bit rate, CBR).

8. Code rate (data rate)

The code rate may also be referred to as a code stream, is a size of data traffic used by a video file within unit time, and is the most important part of picture quality control in video encoding. At a same resolution, a higher code rate of a video file indicates a lower compression ratio and better picture quality.

It can be understood that a video bit rate and a video code rate are two names of a same object. Usually, a video file includes video information and audio information. Because audio and video have different sampling modes and bit rates, an audio bit rate and a video bit rate of a same video file are different. A code rate of a video file is usually a sum of code rates of audio information and video information in the video file. A video file in an RMVB format is used as an example. The video file includes a picture and sound. The VB in the RMVB stands for VBR, and indicates that a dynamic encoding scheme is used in the RMVB, in which a higher sampling rate is used for a complex dynamic picture (for example, a song and dance, a galloping vehicle, a war, or a motion), and a lower sampling rate is used for a static picture, so that resources are properly used, and a balance is achieved between picture quality and a file size.

9. Sampling rate

The sampling rate is a sampling frequency at which an analog signal is converted into a digital signal, to be specific, a quantity of points sampled within unit time. The sampling rate and a bit rate may satisfy the following formula: Bit rate = Sampling rate $\times$ Quantity of used bits $\times$ Quantity of channels.

10. Extended reality (extended reality, XR)

The XR may be various environments that combine reality and virtuality and that are generated by using computing technologies and wearable devices, and human-computer interaction. The XR has advantages such as a plurality of views and strong interactivity, can provide brand-new experience for a user, and has great application value and commercial potential. The XR mainly includes virtual-reality interaction technologies such as VR, AR, and mixed reality (mixed reality, MR), and can be widely used in many fields such as entertainment, gaming, medical care, advertising, industry, online education, and engineering. The VR technology, the AR technology, and the MR technology are separately described below.

The VR technology integrates a plurality of technologies such as computer graphics and multimedia, to simulate functions of human sensory organs, for example, a visual sense, an auditory sense, and a tactile sense. In this way, people immerse in a virtual world generated by a computer, feeling as if they were there, and can perform real-time communication by using a language, a gesture, or the like. This enhances a sense of immersion. In the VR technology, people feel reality of the real world, and can further break through restrictions of time, space, and other conditions to have wonderful experience of entering the virtual world. In the VR technology, a user usually needs to wear an XR terminal (for example, a head-mounted device), so that a visual sense, an auditory sense, and/or a tactile sense are/is simulated for the user. The VR technology may be further used to perform motion tracking on the user, to update simulated visual content, auditory content, and/or tactile content in a timely manner. For example, in the VR technology, status information of the user (for example, position information and posture information of the user) may be processed, to display, on the XR terminal, scene content corresponding to the status information of the user.

In the AR technology, virtual information may be superposed on the real world by using a computer technology, and displayed through a device, for example, a mobile phone, a tablet computer, or glasses, to be perceived by people. In this way, reality and virtuality are merged, to enrich the real world. In short, more information is given to a real object, to enhance a stereoscopic sense, and enhance visual effect and interactive experience. For example, in the AR technology, perceived visual information (the visual information usually includes depth information) may be processed, to merge virtual information with the real world and enable the virtual information to be perceived by a user. In this way, the real world is "enhanced".

In the MR technology, the real world and a virtual world may be mixed to generate a new visual environment. The environment includes both a physical entity and virtual information, and content seen in the visual environment is "real-time" content.

11. Multi-node collaboration

In recent years, a terminal needs to process an increasingly large amount of data, and has an increasing high requirement for transmission bandwidth of a network. For example, a video rendering service represented by cloud gaming and VR and an artificial intelligence (artificial intelligence, AI) computing service represented by terminal visual cognition, AR, and MR have increasingly high requirements on picture quality (for example, a frame rate, a resolution, and light effect). Therefore, these services have increasingly high requirements on transmission bandwidth of a network and computing power of a terminal.

The video rendering service is used as an example. If video rendering is performed on a terminal, computing power of the terminal is insufficient to implement high-quality rendering of a pure local video. If video rendering is performed on a cloud, a low-latency requirement cannot be met, and a picture may be subject to black-border effect, distortion, or another phenomenon due to a limited network transmission capability.

The AI computing service is used an example. If the AI computing service is performed on a terminal, computing power and a quantity of electricity of the terminal are insufficient to support local AI inference. If the AI computing service is performed on a cloud, high uplink bandwidth is needed for AI inference on the cloud when a low-latency requirement is met, and consequently, uplink coverage and a quantity of users are limited.

Therefore, to achieve a balance between a computing capability of a terminal and a data transmission delay, a solution for handling a task through multi-node collaboration is proposed. In this application, a task may be an operation of processing data through a plurality of steps, for example, a video rendering operation (referred to as a video rendering task below) or an AI computing operation (referred to as an AI computing task below). Specifically, the task may be an algorithm (for example, a video rendering algorithm or an AI algorithm), a model (for example, an AI model), or the like. Any one of a plurality of nodes may be any device with a computing capability and a communication capability, for example, a terminal, a RAN node, a functional network element of a RAN node, a core network element, a server, a cloud server, a cloud, or a mobile edge computing (mobile edge computing, MEC) platform. This is not limited. To be specific, the terminal may collaborate with one or more of the foregoing devices to jointly handle a task. In this application, a terminal-cloud collaboration scenario is mainly used as an example for description. A case of another scenario is similar to that of the terminal-cloud collaboration scenario. Therefore, refer to descriptions of the terminal-cloud collaboration scenario in this application. Details are not described again.

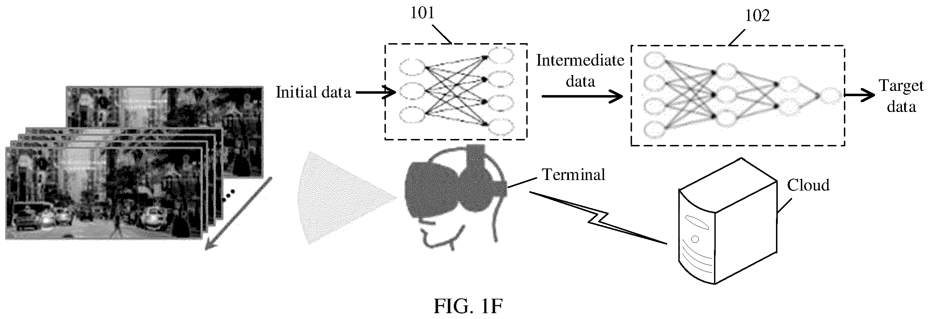

In the terminal-cloud collaboration scenario, task handling steps may be split to obtain a plurality of subtasks, and the plurality of subtasks are deployed on a terminal and a cloud in a distributed manner. In this way, the terminal may perform some subtasks, and the cloud may perform other subtasks. For example, FIG. 1F is a diagram of terminal-cloud collaboration for an uplink service. In FIG. 1F, a task is split into a subtask 101 and a subtask 102. A terminal may obtain initial data (for example, image information), input the initial data to the subtask 101 to obtain intermediate data, and send the intermediate data to the cloud. After receiving the intermediate data, the cloud may input the intermediate data to the subtask 102 to obtain target data. Similarly, for a downlink service, a task may also be split into a plurality of subtasks. The cloud may obtain initial data, input the initial data to some subtasks to obtain intermediate data, and send the intermediate data to the terminal. After receiving the intermediate data, the terminal may input the intermediate data to other subtasks to obtain target data.

It can be understood that a task may be split in a plurality of manners.

For example, the video rendering task is used as an example. The video rendering task may be split by separating a foreground from a background. For example, a foreground part of a picture is usually unpredictable with a small amount of rendering, and may be locally rendered by the terminal, and a background part of the picture is predictable with a large amount of rendering, and is rendered by the cloud. Alternatively, the video rendering task may be split based on a fixation point of a user. For example, a picture at a center of the fixation point may be locally rendered by the terminal, and a picture around the fixation point may be rendered by the cloud. Alternatively, the video rendering task may be split based on an object. For example, different nodes are selected, for rendering, based on rendering computing amounts and data sizes of different objects. It can be understood that a size of video data to be transmitted by the cloud may be reduced through task splitting, to reduce a downlink transmission rate (for example, the downlink transmission rate may be reduced by more than 10 times). Therefore, a quantity of downlink transmission users can be increased by selecting a proper task split point.

For example, the AI computing task is used as an example. An AI computing model may be split into a plurality of submodels, and the submodels are deployed on different nodes. For example, the AI computing model is a neural network (neural network, NN) model or a DNN model. The NN model or the CNN model may include a plurality of layers, for example, an input (input) layer, a convolutional (convolutional) layer, a pooling (pooling) layer, and a fully connected (fully connected) layer. The layers may be split. For example, the input layer and the convolutional layer are deployed on the terminal, and the pooling layer and the fully connected layer are deployed on the cloud. In this way, the terminal may sense behavior data of a user (for example, pose information or voice information of the user) or data of a surrounding environment (for example, a video or an image of the surrounding environment) through a sensing module, for example, a radar, a camera, a handle, or a microphone, sequentially input the data to the input layer and the convolutional layer to obtain intermediate data, and send the intermediate data to the cloud. Subsequently, after receiving the intermediate data, the cloud sequentially inputs the intermediate data to the pooling layer and the fully connected layer to obtain target data.

It is found through further research that, during task splitting, a data size of intermediate data may vary with a task split position (referred to as a task split point below).

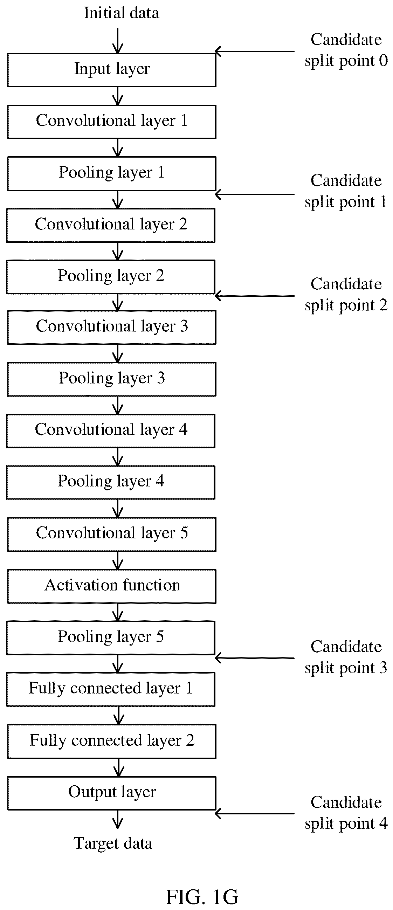

For example, a CNN model shown in FIG. 1G is used as an example. The CNN model includes an input layer, a convolutional layer 1, a pooling layer 1, a convolutional layer 2, a pooling layer 2, a convolutional layer 3, a pooling layer 3, a convolutional layer 4, a pooling layer 4, a convolutional layer 5, an activation function (for example, a rectified linear function (rectified linear unit, ReLU)), a pooling layer 5, a fully connected layer 1, a fully connected layer 2, and an output layer. Initial data may be sequentially input to the foregoing layers to obtain target data. FIG. 1G further shows five candidate split points (candidate split point): a candidate split point 0 to a candidate split point 4. The five candidate split points are at different positions in the CNN model. It can be understood that a layer located before a candidate split point may be deployed on the terminal, and a layer located after the candidate split point may be deployed on the cloud. The candidate split point 0 is located before the input layer. Therefore, the terminal sends initial data to the cloud without performing a task, and the cloud performs all tasks. The candidate split point 1 is located after the pooling layer 1. Therefore, the terminal performs a task located before the pooling layer 1, and the cloud performs a task located after the pooling layer 1. The candidate split point 2 is located after the pooling layer 2. Therefore, the terminal performs a task located before the pooling layer 2, and the cloud performs a task located after the pooling layer 2. The candidate split point 3 is located after the pooling layer 5. Therefore, the terminal performs a task located before the pooling layer 5, and the cloud performs a task located after the pooling layer 5. The candidate split point 4 is located after the output layer. Therefore, the terminal performs all tasks, the cloud does not perform a task, and the terminal does not send intermediate data to the cloud. An approximate output data size (approximate output data size) (namely, a data size of intermediate data) and a required uplink (uplink, UL) data rate (required UL data rate) that correspond to each candidate split point may be shown in Table 1. It can be learned from Table 1 that a data size of intermediate data corresponding to the candidate split point 3 is the smallest, and a data size of intermediate data corresponding to the candidate split point 1 is the largest.

Table 1

| Split point (split point) | Approximate output data size (MByte) | Required UL data rate (Mbit/s) |
|---|---|---|
| Candidate split point 0 | 0.15 | 36 |
| Candidate split point 1 | 0.27 | 65 |
| Candidate split point 2 | 0.17 | 41 |
| Candidate split point 3 | 0.02 | 4.8 |
| Candidate split point 4 | N/A | N/A |

To sum up, to improve flexibility of handling a task by each node, a requirement for adjusting a task split point is further proposed.

It can be understood that FIG. 1G shows merely an example of the CNN model. During specific application, the CNN model may include more or fewer layers than those in FIG. 1G. For example, the CNN model further includes a softmax function and/or an argmax function after the fully connected layer. This is not limited.

12. Service parameter information

In this application, the service parameter information may include at least one of the following: a service transmission parameter, an application layer indicator, or task split point information.
The service transmission parameter may include at least one of the following: a bit rate, a code rate, or a frame rate. The application layer indicator may include at least one of the following: a resolution and/or encoding/decoding (or compression/decompression) parameter information of a multimedia service. The encoding/decoding (or compression/-decompression) parameter information of the multimedia service may indicate a corresponding encoding or compression scheme, for example, H.263, H.264, or H2.265, or indicate corresponding compression ratio value information or sampling rate value information. The task split point information may indicate a task split point. For example, the task split point information may include an identifier of the task split point to indicate the task split point.
It can be understood that the foregoing is merely an example of the service parameter information. During specific application, the service parameter information may include more or less information than the foregoing information. This is not limited.

13. QoS profile

The QoS profile is a file configured by a core network, and can ensure quality of data transmission between a terminal and a RAN node. Therefore, before data is transmitted between the terminal and the RAN node, the RAN node may obtain the QoS profile from the core network, and perform mapping from a QoS flow to a DRB based on the QoS profile. Then, data transmission may be performed between the terminal and the RAN node based on the QoS flow. However, the QoS profile obtained by the RAN node may not be suitable for a current increasingly complex communication scenario.
To obtain a proper QoS profile, this application provides the following three methods.
Method 1: The terminal requests a third network element, for example, an SMF network element, in the core network to establish a second session. The third network element configures raw QoS configuration information and a plurality of pieces of alternative QoS configuration information (Alternative QoS Profile) for the second session, and sends the raw QoS configuration information and the plurality of pieces of alternative QoS configuration information to the RAN node. The raw QoS configuration information or any piece of alternative QoS configuration information includes at least one of the following: a guaranteed flow bit rate (guaranteed flow bit rate, GFBR), a packet delay budget (packet delay budget, PDB), a packet error rate (packet error rate, PER), a guaranteed bit rate (guaranteed bit rate, GBR), or a guaranteed transmission data size. After the RAN node receives the foregoing information, if a current network status of the RAN node cannot satisfy quality of service required by the raw QoS configuration information, for example, one or more of a GFBR indicator, a PDB indicator, a PER indicator, a GBR indicator, or a guaranteed transmission data size indicator indicated by the raw QoS configuration information cannot be met, the RAN node determines, from the plurality of pieces of alternative QoS configuration information, QoS configuration information that matches the current network status (for example, the RAN node determines, based on a priority of each piece of alternative QoS configuration information, the QoS configuration information that matches the current network status), provides a service for a corresponding QoS flow (QoS flow) based on the determined QoS configuration information, and sends an identifier of the determined QoS configuration information to the terminal or a cloud. For example, the RAN node sends the identifier to the SMF network element, the SMF network element sends the identifier to a PCF network element after receiving the identifier, and the PCF network element sends the identifier to the cloud through an AF network element after receiving the identifier. Alternatively, the RAN node sends the identifier to the SMF network element, and the SMF network element sends the identifier to the terminal through NAS signaling after receiving the identifier. Subsequently, if the RAN node can satisfy the quality of service required by the raw QoS configuration information, the RAN node may indicate, through the SMF network element, the terminal or the cloud to restore to a previous task split point.
It can be understood that, in the method 1, if the RAN node cannot satisfy the quality of service required by the raw QoS configuration information, the RAN node may determine, in a timely manner from the plurality of pieces of alternative QoS configuration information, the QoS configuration information that matches the current network status, to determine proper QoS configuration information. In addition, after determining the QoS configuration information, the RAN node may send the identifier of the determined QoS configuration information to the terminal or the cloud, so that the terminal or the cloud determines corresponding service parameter information based on a correspondence between the identifier and service parameter information, to provide a better service for a user. For a description of the service parameter information, refer to the foregoing descriptions of the technical terms in this application. Details are not described again.

Method 2: The terminal indicates, to a first network element in the core network, that a first session may correspond to a plurality of pieces of candidate QoS configuration information. The first network element obtains, based on the indication of the terminal, the plurality of pieces of candidate QoS configuration information corresponding to the first session, and sends the plurality of pieces of candidate QoS configuration information to the RAN node. Any one of the plurality of pieces of candidate quality of service configuration information includes a parameter related to power consumption of the terminal. After receiving the plurality of pieces of candidate QoS configuration information, the RAN node determines target QoS configuration information from the plurality of pieces of candidate QoS configuration information based on a current network status and the parameter related to the power consumption of the terminal, and indicates, to the terminal and/or a cloud, a parameter related to the target QoS configuration information. Optionally, the first network element may be an SMF network element or a new core network element. Optionally, the plurality of pieces of candidate QoS configuration information may include the raw QoS configuration information and the plurality of pieces of alternative QoS configuration information in the method 1.

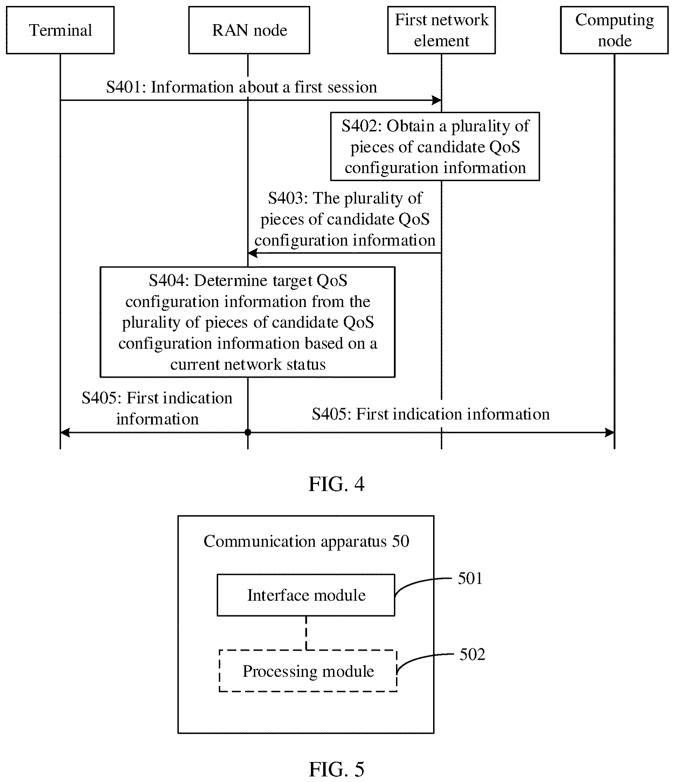

It can be understood that, in the method 2, the RAN node may determine the target QoS configuration information from the plurality of pieces of candidate QoS configuration information based on the current network status and the parameter related to the power consumption of the terminal, and indicate, to the terminal and/or the cloud, the parameter related to the target QoS configuration information. When determining the target QoS configuration information, the RAN node considers not only the current network status but also the parameter related to the power consumption of the terminal, to control the power consumption or energy consumption of the terminal, avoid overheat of the terminal or impact on standby time of the terminal, and therefore improve user experience. For example, the terminal and/or the cloud may respond to a change in an air interface network status based on the indication of the RAN node, and then determine the service parameter information based on the parameter related to the target QoS configuration information. This avoids excessively high power consumption or energy consumption of the terminal when the terminal and/or the cloud process/processes data based on the service parameter information, to provide a better service for a user. It should be understood that the parameter related to the power consumption of the terminal may be replaced with task computing accuracy. In this way, when determining the target QoS configuration information, the RAN node considers not only the current network status but also the task computing accuracy, to ensure accuracy of a task execution result. A specific process of the method 2 is specifically described in the following embodiment shown in FIG. 4. Details are not described herein.

In the method 2, a device that determines the target QoS configuration information is the RAN node. During specific application, a device that determines target QoS configuration information may be a device other than the RAN node, for example, any one or more network elements in the core network. A method 3 shows a process of determining target QoS configuration information by a fourth network element in the core network. Optionally, the fourth network element may be any core network element, for example, an AMF network element, an SMF network element, or a PCF network element. This is not limited.

Method 3: The terminal indicates, to a first network element in the core network, that a first session may correspond to a plurality of pieces of candidate QoS configuration information. The first network element obtains, based on the indication of the terminal, the plurality of pieces of candidate QoS configuration information corresponding to the first session, and sends the plurality of pieces of candidate QoS configuration information to a fourth network element. Any one of the plurality of pieces of candidate quality of service configuration information includes a parameter related to power consumption of the terminal. The RAN node sends a current network status to the fourth network element. After receiving the plurality of pieces of candidate QoS configuration information and the current network status, the fourth network element determines target QoS configuration information from the plurality of pieces of candidate QoS configuration information based on the current network status and the parameter related to the power consumption of the terminal, and indicates, to the terminal and/or a cloud, a parameter related to the target QoS configuration information.

It can be understood that, in the method 3, the fourth network element may determine the target QoS configuration information from the plurality of pieces of candidate QoS configuration information based on the current network status and the parameter related to the power consumption of the terminal, and indicate, to the terminal and/or the cloud, the parameter related to the target QoS configuration information. When determining the target QoS configuration information, the fourth network element considers not only the current network status but also the parameter related to the power consumption of the terminal, to control the power consumption or energy consumption of the terminal, avoid overheat of the terminal or impact on standby time of the terminal, and therefore improve user experience. For example, the terminal and/or the cloud may respond to a change in an air interface network status based on the indication of the fourth network element, and then determine the service parameter information based on the parameter related to the target QoS configuration information. This avoids excessively high power consumption or energy consumption of the terminal when the terminal and/or the cloud process/processes data based on the service parameter information, to provide a better service for a user. It should be understood that the parameter related to the power consumption of the terminal may be replaced with task computing accuracy. In this way, when determining the target QoS configuration information, the fourth network element considers not only the current network status but also the task computing accuracy, to ensure accuracy of a task execution result.

It can be understood that, after determining the target QoS configuration information, the fourth network element may further indicate the target QoS configuration information to the RAN node, so that the RAN node transmits data based on the target QoS configuration information.

It should be understood that the fourth network element and the first network element may be a same network element or different network elements. This is not limited. If the fourth network element and the first network element are a same network element, the first network element may not need to send the plurality of pieces of candidate QoS configuration information to the fourth network element.

It can be understood that an idea of the method 3 is basically similar to an idea of the method 2. Therefore, for a specific process of the method 3, refer to corresponding descriptions in the following embodiment shown in FIG. 4. Details are not described again.

The following describes implementations of this application in detail with reference to the accompanying drawings.

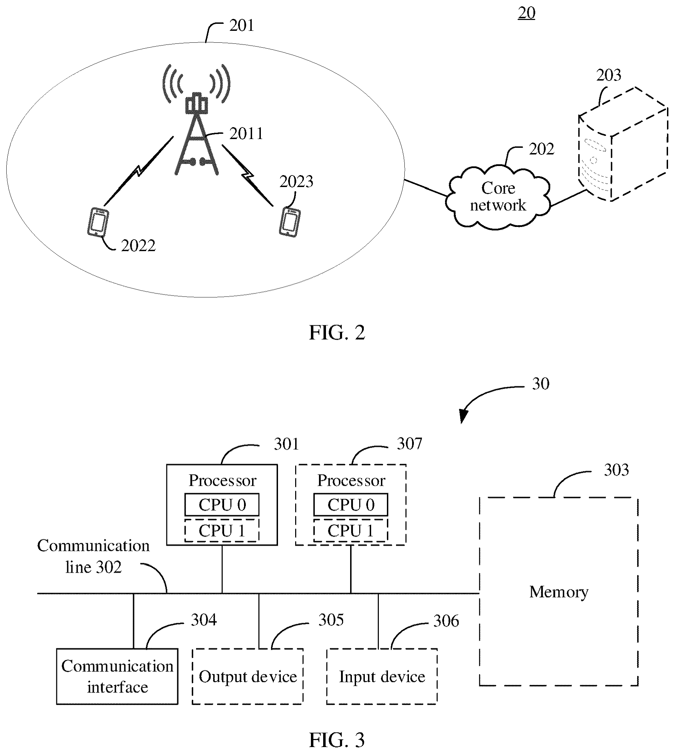

A method provided in this application may be applied to various communication systems. For example, the communication system may be a universal mobile telecommunications system (universal mobile telecommunications system, UMTS), an LTE system, a 5G communication system, a Wi-Fi system, a 3GPP-related communication system, a future evolved communication system (for example, a sixth-generation (6th generation, 6G) communication system), or a system integrating a plurality of systems. This is not limited. 5G may also be referred to as NR. The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of a communication system 20 according to this application. In FIG. 2, the communication system 20 may include a RAN 201 and a core network 202. The RAN 201 includes at least one RAN node (for example, one RAN node 2011 is shown in FIG. 2) and at least one terminal (for example, two terminals are shown in FIG. 2: a terminal 2022 and a terminal 2023). In FIG. 2, the terminal may be connected to the RAN node 2011 in a wireless manner. The RAN node 2011 is connected to the core network 202 in a wireless or wired manner. A network element in the core network 202 and the RAN node 2011 in the RAN 201 may be respectively different physical devices, or may be a same physical device that integrates a logical function of the core network and a logical function of the radio access network.

The RAN 201 may be a 3GPP-related cellular system, for example, a 4G or 5G mobile communication system, or a future-oriented evolved system (for example, a 6G mobile communication system). The RAN 201 may alternatively be an ORAN, a CRAN, or a Wi-Fi system. The RAN 201 may alternatively be a communication system that integrates two or more of the foregoing systems. The RAN node 2011 may also sometimes be referred to as an access network device, a RAN entity, an access node, or the like, and constitutes a part of a communication system, to help a terminal implement wireless access. It can be understood that, for specific descriptions of the terminal and the RAN node in FIG. 2, reference may be made to the foregoing descriptions of the terminal, the RAN node, the protocol layer, the CU, the DU, or the RIC. Details are not described again.

An architecture of the core network 202 may be shown in FIG. 1E. The RAN node 2011 in FIG. 2 corresponds to the RAN node in FIG. 1E, and the terminal in FIG. 2, for example, the terminal 2022 or the terminal 2023, corresponds to the terminal in FIG. 1E. For other descriptions of the core network, refer to the foregoing descriptions of the core network. Details are not described again.

Optionally, the communication system 20 further includes a computing node 203. The computing node 203 may be any node with a computing capability and a communication capability, for example, a server, a cloud server, a cloud, or an MEC platform. The computing node 203 may be located in a data network after a user plane function of the core network 202, exchange user plane application layer data with the communication system 20 through an interface (for example, an N6 interface), and provide a computing service.

The communication system 20 shown in FIG. 2 is merely an example, and is not intended to limit the technical solutions of this application. A person skilled in the art should understand that, during specific implementation, the communication system 20 may further include another device, and a quantity of RAN nodes, terminals, core network elements, or computing nodes may alternatively be determined according to a specific requirement. This is not limited.

Optionally, in this application, each network element (for example, the terminal, the RAN node, the network element in the core network, or the computing node) in FIG. 2 may also be referred to as a communication apparatus, and may be a general-purpose device or a dedicated device. This is not specifically limited in this application.

Optionally, in this application, a related function of each network element (for example, the terminal, the RAN node, the network element in the core network, or the computing node) in FIG. 2 may be implemented by one device, or may be jointly implemented by a plurality of devices, or may be implemented by one or more functional modules in one device. This is not specifically limited in this application. It can be understood that the foregoing function may be a network element in a hardware device, or may be a software function running on dedicated hardware, or a combination of hardware and software, or an instantiated virtualized function on a platform (for example, a cloud platform).

During specific implementation, in this application, each network element (for example, the terminal, the RAN node, the network element in the core network, or the computing node) in FIG. 2 may be in a composition structure shown in FIG. 3, or include a component shown in FIG. 3. FIG. 3 is a diagram of a hardware structure of a communication apparatus to which this application is applicable. The communication apparatus 30 includes at least one processor 301 and at least one communication interface 304, to implement the method provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits for controlling program execution for the solutions of this application.

The communication line 302 may include a channel for transmitting information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of instructions or data structures and that is accessible to a computer, but is not limited thereto. The memory may exist independently, and is coupled to the processor 301 through the communication line 302. The memory 303 may alternatively be integrated with the processor 301. Usually, the memory provided in this application may be non-volatile.

The memory 303 is configured to store computer-executable instructions for performing the solutions provided in this application, and the processor 301 controls execution of the computer-executable instructions. The processor 301 is configured to execute the computer-executable instructions stored in the memory 303, to implement the method provided in this application. Alternatively, optionally, in this application, the processor 301 may perform a processing-related function in a method provided below in this application, and the communication interface 304 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core processor (single-CPU) or a multi-core processor (multi-CPU). The processor herein may be one or more devices, circuits, and/or processing cores for processing data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive user input in a plurality of manners. For example, the input device 306 may be a mouse, a keyboard, a touchscreen device, or a sensor device.

It can be understood that the composition structure shown in FIG. 3 does not constitute a limitation on the communication apparatus. In addition to the components shown in FIG. 3, the communication apparatus may include more or fewer components than those shown in the figure, or some components may be combined, or the components may be arranged differently.

The following describes the method provided in this application with reference to the accompanying drawings. Network elements in the following embodiments may have the components shown in FIG. 3, and details are not described again.

It can be understood that names of messages between network elements, names of parameters in messages, or the like in the following embodiments of this application are merely examples, and there may alternatively be other names during specific implementation. This is not specifically limited in this application.

It can be understood that, in this application, "/" may indicate an "or" relationship between associated objects. For example, A/B may indicate A or B. "And/or" may indicate that there are three relationships between associated objects. For example, A and/or B may indicate the following three cases: Only A exists, both A and B exist, and only B exists, where A and B may be in a singular form or a plural form. In addition, an expression similar to "at least one of A, B, and C" or "at least one of A, B, or C" usually indicates any one of the following: Only A exists, only B exists, only C exists, both A and B exist, both A and C exist, both B and C exist, or all of A, B, and C exist. In the foregoing descriptions, the three elements A, B, and C are used as an example to describe optional elements of the item. When the expression includes more elements, a meaning of the expression may be obtained according to the foregoing rule.

For ease of description of the technical solutions of this application, in this application, the terms "first", "second", and the like may be used to distinguish between technical features with a same function or similar functions. The terms "first", "second", and the like do not limit a quantity or an execution sequence, and the terms "first", "second", and the like do not indicate a definite difference. In this application, the term "in an example", "for example", or the like indicates an example, an illustration, or a description. Any embodiment or design scheme described with "in an example" or "for example" should not be construed as being more preferred or advantageous than another embodiment or design scheme. The term "in an example", "for example", or the like is intended to present a related concept in a specific manner for ease of understanding.

It can be understood that an "embodiment" mentioned throughout this specification means that particular features, structures, or characteristics related to the embodiment are included in at least one embodiment of this application. Therefore, embodiments throughout this specification are not necessarily a same embodiment. In addition, these particular features, structures, or characteristics may be combined in one or more embodiments in any proper manner. It can be understood that sequence numbers of processes do not mean execution sequences in embodiments of this application. The execution sequences of the processes should be determined based on functions and internal logic of the processes, and should not be construed as any limitation on implementation processes of this application.

It can be understood that, in this application, both "when" and "if" mean that corresponding processing is performed in an objective case, but are not intended to limit time. In addition, the terms do not necessarily mean that a determining action is performed during implementation, and do not mean another limitation either.

In this application, "a plurality of" may be understood as two or more, unless otherwise specified. For example, a plurality of pieces of candidate QoS configuration information may be two or more pieces of candidate QoS configuration information.

It can be understood that, in some scenarios, some optional features in this application may be independently implemented without relying on another feature, for example, a solution on which the optional features are currently based, to resolve a corresponding technical problem and achieve corresponding effects. Alternatively, in some scenarios, the optional features may be combined with another feature according to a requirement. Correspondingly, an apparatus provided in this application may also correspondingly implement these features or functions. Details are not described herein.

It can be understood that, in this application, a same step, or steps or technical features that have a same function may be mutually referenced in different embodiments.

It can be understood that, in this application, a terminal and/or a RAN node and/or a network element in a core network and/or a computing node may perform some or all of steps in this application. These steps are merely examples. In this application, other steps or variations of various steps may alternatively be performed. In addition, the steps may be performed in an order different from an order shown in this application, and not all of the steps in this application are necessarily performed.

It can be understood that, in the following method provided in this application, the method is described by using an example in which a terminal, a RAN node, a network element in a core network, and a computing node serve as execution entities of interaction. However, an execution entity of the interaction is not limited in this application. For example, the terminal in the method provided in the following embodiments of this application may alternatively be a chip, a chip system, or a processor that supports the terminal in implementing the method, or may be a logical node, a logical module, or software that can implement all or some of functions of a server; the RAN node in the method provided below in this application may alternatively be a chip, a chip system, or a processor that supports the RAN node in implementing the method, or may be a logical node, a logical module, or software that can implement all or some of functions of an electronic device; the network element in the core network in the method provided below in this application may alternatively be a chip, a chip system, or a processor that supports the network element in the core network in implementing the method, or may be a logical node, a logical module, or software that can implement all or some of functions of the network element in the core network; and the computing node in the method provided below in this application may alternatively be a chip, a chip system, or a processor that supports the computing node in implementing the method, or may be a logical node, a logical module, or software that can implement all or some functions of the computing node.

FIG. 4 shows a communication method according to this application. The method may include the following steps.

S401: A terminal sends information about a first session to a first network element. Correspondingly, the first network element receives the information about the first session from the terminal.

In this application, the terminal may be any terminal in the RAN 201 shown in FIG. 2, for example, the terminal 2022 or the terminal 2023. The first network element may be any network element in the core network 202 shown in FIG. 2, or the first network element may be a new core network element.

In this application, the information about the first session indicates that the first session of the terminal corresponds to a plurality of pieces of candidate QoS configuration information. In this way, the first network element can determine that the first session corresponds to the plurality of pieces of candidate QoS configuration information, and then obtain, for a RAN node, for example, the RAN node 2011 in the RAN 201 shown in FIG. 2, the plurality of pieces of candidate QoS configuration information corresponding to the first session.

In this application, that the first session corresponds to the plurality of pieces of candidate QoS configuration information may be understood as that the first session includes at least one QoS flow (QoS flow) that supports a plurality of pieces of candidate QoS configuration information. For example, the first session includes one QoS flow, and the QoS flow supports a plurality of pieces of candidate QoS configuration information; or the first session includes a plurality of QoS flows, and at least one of the plurality of QoS flows supports a plurality of pieces of candidate QoS configuration information.

In a possible design, the information about the first session includes at least one of the following information: an identifier of the first session, an identifier of the terminal (for example, a UE ID), an address of the terminal (an internet protocol (Internet Protocol, IP) address or a MAC address of the terminal), a data network name (data network name, DNN), or single network slice selection assistance information (single network slice selection assistance information, S-NSSAI). Optionally, the first session is a PDU session. Therefore, the identifier of the first session may be a PDU session identifier (PDU session ID).

Optionally, one type of information or a combination of a plurality of types of information in the information about the first session may uniquely identify a PDU session. Therefore, the first network element may determine whether the PDU session includes a QoS flow that supports the plurality of pieces of candidate QoS configuration information. For example, a new meaning may be specified for the one type of information or the combination of the plurality of types of information, so that the one type of information or the combination of the plurality of types of information indicates whether the PDU session includes a QoS flow that supports the plurality of pieces of candidate QoS configuration information.

Optionally, the information about the first session is carried in a session establishment request (session establishment request) message.

It can be understood that the terminal may directly send the information about the first session to the first network element, or may send the information about the first session to the first network element through at least one intermediate network element. For example, the first session is a PDU session, and the first network element is an SMF network element. The terminal may send the session establishment request message to the SMF network element through an AMF network element. The session establishment request message includes the information about the first session. After receiving the session establishment request message, the SMF network element may identify the first session based on the information about the first session, and determine that the first session includes a QoS flow that supports a plurality of pieces of candidate QoS configuration information.

S402: The first network element obtains the plurality of pieces of candidate QoS configuration information.

In this application, the QoS configuration information may be replaced with a QoS profile (QoS profile). For example, the candidate QoS configuration information may be replaced with a candidate QoS profile, and similar processing may also be performed on other QoS configuration information (for example, target QoS configuration information below). Details are not described again.

In this application, the plurality of pieces of candidate QoS configuration information may be replaced with a candidate QoS configuration information set (candidate QoS profile set), a candidate QoS configuration information collection, a candidate QoS configuration information group, or the like. This is not limited.

In a possible design, any one of the plurality of pieces of candidate QoS configuration information includes a parameter related to power consumption of the terminal. In this way, when subsequently determining the target QoS configuration information from the plurality of pieces of candidate QoS configuration information, the RAN node may consider the power consumption or energy consumption of the terminal, to control the power consumption or the energy consumption of the terminal, avoid overheat of the terminal or impact on standby time of the terminal, and therefore improve user experience.

Optionally, the parameter related to the power consumption of the terminal includes at least one of the following: computing power consumption of the terminal, total power consumption of the terminal, computing energy consumption of the terminal, total energy consumption of the terminal, or transmission power consumption of the terminal. The transmission power consumption of the terminal may be replaced with transmit power consumption of the terminal. The total power consumption of the terminal includes the computing power consumption of the terminal and the transmit power consumption of the terminal. Any one of the foregoing types of power consumption may be average power consumption, maximum power consumption, minimum power consumption, or actual power consumption within first duration. For example, the computing power consumption of the terminal may be average computing power consumption, maximum computing power consumption, minimum computing power consumption, or actual computing power consumption of the terminal within the first duration. For another example, the computing power consumption of the terminal may be average computing power consumption of the terminal within a long time, or computing power consumption of the terminal within a short time in which the terminal completes processing once, or average computing power consumption of the terminal within a predefined period of time. Similarly, the total energy consumption of the terminal includes the computing energy consumption of the terminal and transmit energy consumption of the terminal. The transmit energy consumption of the terminal may be replaced with transmission energy consumption of the terminal. It should be understood that the parameter related to the power consumption of the terminal may alternatively include the transmission energy consumption of the terminal or the transmit energy consumption of the terminal. This is not limited. Any one of the foregoing types of energy consumption may be converted into a corresponding energy consumption indicator of the terminal. Any one of the foregoing types of energy consumption may be average energy consumption, maximum energy consumption, minimum energy consumption, or actual energy consumption within second duration. Any one of the foregoing types of power consumption is measured in watts or the like, and any one of the foregoing types of energy consumption is measured in joules or the like.

It can be understood that the parameter related to the power consumption of the terminal may be reported by the terminal to a core network, for example, is reported by the terminal to the core network when the terminal registers with a network or reports a capability of the terminal.

It can be understood that the first duration and the second duration may be the same or different. The first duration or the second duration is preset duration or duration specified in a protocol. This is not limited.

It can be understood that any one of the foregoing types of power consumption may be power consumption at a granularity of a frame or power consumption at a granularity of a subtask (for example, a task obtained through splitting). Similarly, any one of the foregoing types of energy consumption may be energy consumption at a granularity of a frame or energy consumption at a granularity of a subtask.

Optionally, any piece of candidate QoS configuration information further includes at least one of the following: an identifier of the candidate QoS configuration information, task computing accuracy, a GFBR, a PDB, a PER, a GBR, a guaranteed transmission data size, or priority information. The identifier of the candidate QoS configuration information is used to identify the candidate QoS configuration information, to distinguish between different candidate QoS configuration information. For example, the identifier of the candidate QoS configuration information may be an index (index), for example, an index of the candidate QoS configuration information in the plurality of pieces of candidate QoS configuration information. The task computing accuracy may be replaced with precision of the task, and indicates precision of a result obtained based on the task. An AI computing task is used as an example. The task computing accuracy may indicate precision of an inference result or a training result obtained by using an AI model or an AI algorithm. For example, the task computing accuracy being 90% indicates that the precision of the inference result or the training result obtained by using the AI model or the AI algorithm is greater than or equal to 90%. It can be understood that higher task computing accuracy indicates a larger AI model or a more complex AI algorithm, a longer latency of executing a subtask by the terminal or a cloud, a larger size of intermediate data corresponding to the task, and a higher requirement on a transmission rate. The GFBR may be an uplink GFBR or a downlink GFBR. For example, for an uplink service, the GFBR is an uplink GFBR; and for a downlink service, the GFBR is a downlink GFBR. The priority information indicates a priority of the candidate QoS configuration information. The guaranteed transmission data size is a guaranteed size of data that can be transmitted by the RAN node within a period of time (for example, within one slot, one frame, or preset duration).

It can be understood that the foregoing is merely an example of information or parameters included in the candidate QoS configuration information. During specific application, the candidate QoS configuration information may include more or less information or parameters than those described above. This is not limited.

It can be understood that, if the candidate QoS configuration information includes the identifier of the candidate QoS configuration information, different candidate QoS configuration information may be distinguished by using the identifier. If the candidate QoS configuration information includes the task computing accuracy, when subsequently determining the target QoS configuration information from the plurality of pieces of candidate QoS configuration information, the RAN node may consider the task computing accuracy, to ensure accuracy of a task execution result. If the candidate QoS configuration information includes the GFBR, when subsequently determining the target QoS configuration information from the plurality of pieces of candidate QoS configuration information, the RAN node may determine, based on the GFBR, whether the candidate QoS configuration information matches a current network status. If the candidate QoS configuration information includes the PDB, when subsequently determining the target QoS configuration information from the plurality of pieces of candidate QoS configuration information, the RAN node may determine, based on the PDB, whether the candidate QoS configuration information matches a current network status. If the candidate QoS configuration information includes the PER, when subsequently determining the target QoS configuration information from the plurality of pieces of candidate QoS configuration information, the RAN node may determine, based on the PER, whether the candidate QoS configuration information matches a current network status. If the candidate QoS configuration information includes the GBR, when subsequently determining the target QoS configuration information from the plurality of pieces of candidate QoS configuration information, the RAN node may determine, based on the GBR, whether the candidate QoS configuration information matches a current network status. If the candidate QoS configuration information includes the guaranteed transmission data size, when subsequently determining the target QoS configuration information from the plurality of pieces of candidate QoS configuration information, the RAN node may determine, based on the guaranteed transmission data size, whether the candidate QoS configuration information matches a current network status. If the candidate QoS configuration information includes the priority information, when subsequently determining the target QoS configuration information from the plurality of pieces of candidate QoS configuration information, the RAN node may consider a priority indicated by the priority information.

For example, the plurality of pieces of candidate QoS configuration information may be described in a manner shown in Table 2. It can be learned from Table 2 that a value of a quantity of pieces of candidate QoS configuration information ranges from 1 to 8, and a value type is an integer (INTEGER). A value of the identifier of the candidate QoS configuration information ranges from 1 to 64, and a value type is an integer. A value of the computing power consumption of the terminal ranges from 0 watts (watt) to 6.3 watts, a value type is an integer, and a unit (unit) is 0.1 watt. A value of the task computing accuracy ranges from 60% to 90%, a value type is an integer, and a unit is 1%. It should be understood that, for content of Table 2, reference may be made to descriptions about a candidate QoS profile set of each QoS flow that supports a candidate QoS profile set in 9.3.1.151 in 3GPP TS38.413 V17.3.0.

Table 2

| Information element (information element) name | Value range (range) | IE value type (IE type and reference) | Semantics description (Semantics description) |
|---|---|---|---|
| Item of the candidate QoS configuration information set | 1 to 8 | INTEGER (1 to 8) | |
| Identifier | 1 to 64 | INTEGER (1 to 64) | |
| GFBR | | | |
| PDB | | | |
| PER | | | |
| GBR | | | |
| Guaranteed transmission data size | | | |
| Computing power consumption of the terminal | 0 to 6.3 watts | INTEGER (1 to 63) | Unit [0.1 watt] |
| Task computing accuracy | 60% to 90% | INTEGER (0 to 39) | Unit [1%] |

In a possible implementation, the first network element obtains the plurality of pieces of candidate QoS configuration information locally or from a network element in the core network other than the first network element.

For example, the first network element is an SMF network element. If the plurality of pieces of candidate QoS configuration information are stored on the SMF network element, the SMF network element locally obtains the plurality of pieces of candidate QoS configuration information. If the plurality of pieces of candidate QoS configuration information are not stored on the SMF network element, the SMF network element sends, to a PCF network element or an AF network element, request information for requesting the candidate QoS configuration information. After receiving the request information, the PCF network element or the AF network element sends the plurality of pieces of candidate QoS configuration information to the SMF network element.

S403: The first network element sends the plurality of pieces of candidate QoS configuration information to the RAN node. Correspondingly, the RAN node receives the plurality of pieces of candidate QoS configuration information from the first network element.

It can be understood that, if the first session includes a plurality of QoS flows that support a plurality of pieces of candidate QoS configuration information, the first network element sends, to the RAN node, the plurality of pieces of candidate QoS configuration information supported by the plurality of QoS flows.

It can be understood that the first network element may directly send the plurality of pieces of candidate QoS configuration information to the RAN node, or send the plurality of pieces of candidate QoS configuration information to the RAN node through at least one intermediate network element.

For example, the first network element is an SMF network element, and the SMF network element may send the plurality of pieces of candidate QoS configuration information to the RAN node through the AMF network element.

Optionally, the plurality of pieces of candidate QoS configuration information are carried in a session resource establishment request message.

In a possible implementation, after receiving the plurality of pieces of candidate QoS configuration information, the RAN node maps a QoS flow to a DRB. For example, the RAN node maps the QoS flow to the DRB based on one of the plurality of pieces of candidate QoS configuration information. The RAN node may further perform air interface signaling interaction related to a DRB configuration with the terminal.

Optionally, after completing the mapping, the RAN node sends, to the first network element, indication information indicating a resource establishment result.

It can be understood that, if the plurality of pieces of candidate QoS configuration information are carried in the session resource establishment request message, the indication information indicating the resource establishment result may be carried in a session resource establishment response message.

It can be understood that the RAN node may directly send, to the first network element, the indication information indicating the resource establishment result; or send, to the first network element through at least one intermediate network element, the indication information indicating the resource establishment result. For example, if the first network element is an SMF network element, the RAN node sends, to the SMF network element through the AMF network element, the indication information indicating the resource establishment result.

S404: The RAN node determines the target QoS configuration information from the plurality of pieces of candidate QoS configuration information based on a current network status.

In this application, the current network status may include at least one of the following: a GFBR of a current network, a PDB of a current network, a PER of a current network, a GBR of a current network, a guaranteed transmission data size of a current network, channel state information (channel state information, CSI) of a current network, buffer status report information of a current network, or congestion status information of a current network.

It can be understood that, if the first session includes a plurality of QoS flows that support a plurality of pieces of candidate QoS configuration information, the RAN node determines, based on the current network status, target QoS configuration information of each QoS flow from a plurality of pieces of candidate QoS configuration information supported by the QoS flow. Target QoS configuration information of different QoS flows may be the same or different.

It can be understood that a manner of determining the target QoS configuration information by the RAN node varies with content included in the candidate QoS configuration information. For example, the RAN node may determine the target QoS configuration information in any one of the following four manners.

Manner 1: The RAN node determines, as the target QoS configuration information, candidate QoS configuration information, among the plurality of pieces of candidate QoS configuration information, that matches the current network status.

In a possible implementation, if any piece of candidate QoS configuration information includes one or more of a GFBR, a PDB, a PER, a GBR, or a guaranteed transmission data size, the RAN node determines, as the target QoS configuration information, candidate QoS configuration information, among the plurality of pieces of candidate QoS configuration information, that can satisfy the current network status.

For example, any piece of candidate QoS configuration information includes a GFBR. The RAN node may compare the GFBR of the current network with a GFBR included in each piece of candidate QoS configuration information, and determine, as the target QoS configuration information, candidate QoS configuration information that can satisfy the GFBR of the current network.

For example, any piece of candidate QoS configuration information includes a GFBR and a PDB. The RAN node may compare the GFBR of the current network and the PDB of the current network with a GFBR and a PDB that are included in each piece of candidate QoS configuration information, and determine, as the target QoS configuration information, candidate QoS configuration information that can satisfy the GFBR of the current network and the PDB of the current network.

It can be understood that, if a quantity of pieces of candidate QoS configuration information, among the plurality of pieces of candidate QoS configuration information, that matches the current network status is greater than 1, the RAN node may further determine the target QoS configuration information according to a preset policy. For example, the RAN node may randomly determine the target QoS configuration information from the candidate QoS configuration information that matches the current network status. Alternatively, the RAN node may determine, as the target QoS configuration information, candidate QoS configuration information with a highest priority among the candidate QoS configuration information that matches the current network status. Alternatively, the RAN node may determine, as the target QoS configuration information, candidate QoS configuration information, among the candidate QoS configuration information that matches the current network status, that can support access of a largest quantity of terminals. Alternatively, the RAN node may determine, as the target QoS configuration information, candidate QoS configuration information with a lowest transmission rate among the candidate QoS configuration information that matches the current network status, so that the RAN node can be accessed by more terminals and provide services for more terminals.

Manner 2: The RAN node determines the target QoS configuration information from the plurality of pieces of candidate QoS configuration information based on the current network status and a parameter that is related to the power consumption of the terminal and that is included in at least one of the plurality of pieces of candidate QoS configuration information.

In a possible implementation, if any piece of candidate QoS configuration information includes one or more of a GFBR, a PDB, a PER, a GBR, or a guaranteed transmission data size, and one or more of computing power consumption of the terminal, total power consumption of the terminal, computing energy consumption of the terminal, total energy consumption of the terminal, or transmission power consumption of the terminal, the RAN node determines, as the target QoS configuration information, candidate QoS configuration information, among the plurality of pieces of candidate QoS configuration information, that matches the current network status and that meets a terminal power consumption constraint condition.

The terminal power consumption constraint condition is a condition that the power consumption or the energy consumption of the terminal needs to meet. For example, the terminal power consumption constraint condition indicates that average power consumption of the terminal is less than or equal to 2 watts (it is usually considered that 2 W is a limitation on physical power consumption of the terminal, for example, a mobile phone, and if the average power consumption of the terminal is greater than or equal to 2 watts, the terminal overheats, affecting user experience). The average power consumption of the terminal is a sum of average computing power consumption of the terminal and average transmission power consumption of the terminal.

For example, any piece of candidate QoS configuration information includes a PER and average computing power consumption of the terminal. The RAN node determines, according to the method 1, candidate QoS configuration information that can satisfy the PER of the current network, and sequentially determines whether the candidate QoS configuration information that can satisfy the PER of the current network meets the terminal power consumption constraint condition. For example, if the RAN node determines, according to the method 1, two pieces of candidate QoS configuration information that can satisfy the PER of the current network, and if the 1st piece of candidate QoS configuration information can meet the terminal power consumption constraint condition, the RAN node determines the 1st piece of candidate QoS configuration information as the target QoS configuration information. If the 1st piece of candidate QoS configuration information cannot meet the terminal power consumption constraint condition, the RAN node continues to determine whether the 2nd piece of candidate QoS configuration information meets the terminal power consumption constraint condition.

It can be understood that the terminal may determine, based on a parameter that is in candidate QoS configuration information and that is related to the power consumption of the terminal, whether the candidate QoS configuration information meets the terminal power consumption constraint condition. For example, the RAN node may obtain a ratio of a quantity of times of selecting each piece of candidate QoS configuration information from the plurality of pieces of candidate QoS configuration information within the first duration to a total quantity of times of selecting candidate QoS configuration information by the RAN node within the first duration, and determine, based on the ratio and a parameter that is in the candidate QoS configuration information and that is related to the power consumption of the terminal, whether the candidate QoS configuration information meets the terminal power consumption constraint condition.

For example, the candidate QoS configuration information includes the average computing power consumption of the terminal and the average transmission power consumption of the terminal, and the terminal power consumption constraint condition indicates that the average power consumption of the terminal is less than or equal to 2 watts. The RAN node may obtain the ratio, and estimate the average power consumption of the terminal based on the ratio and the average computing power consumption of the terminal and the average transmission power consumption of the terminal that are included in the candidate QoS configuration information. If the estimated average power consumption of the terminal meets the terminal power consumption constraint condition, for example, the estimated average power consumption of the terminal is less than or equal to 2 watts, the RAN node determines that the candidate QoS configuration information meets the terminal power consumption constraint condition. If the estimated average power consumption of the terminal does not meet the terminal power consumption constraint condition, for example, the estimated average power consumption of the terminal is greater than 2 watts, the RAN node determines that the candidate QoS configuration information does not meet the terminal power consumption constraint condition.

The ratio, the average computing power consumption of the terminal and the average transmission power consumption of the terminal that are included in the candidate QoS configuration information, and the estimated average power consumption of the terminal satisfy the following formula: $P = \sum_{1}^{N} R_i(p_{i1} + p_{12})$ , where P is the estimated average power consumption of the terminal, N is a quantity of the plurality of pieces of candidate QoS configuration information, $R_i$ is a ratio of a quantity of times of selecting an $i^{th}$ piece of candidate QoS configuration information by the RAN node within the first duration to the total quantity of times, $p_{i1}$ is average computing power consumption of the terminal that is included in the $i^{th}$ piece of candidate QoS configuration information, and $p_{12}$ is average transmission power consumption of the terminal that is included in the ith piece of candidate QoS configuration information.

In the foregoing example, an example in which the terminal power consumption constraint condition indicates a condition that the power consumption of the terminal needs to meet is used for description. When the terminal power consumption constraint condition indicates a condition that the energy consumption of the terminal needs to meet, the RAN node may determine the target QoS configuration information in a manner similar to that in the foregoing example. Details are not described again.

It can be understood that, if a quantity of pieces of candidate QoS configuration information, among the plurality of pieces of candidate QoS configuration information, that matches the current network status and that meets the terminal power consumption constraint condition is greater than 1, the RAN node may further determine the target QoS configuration information according to a preset policy. For a specific manner of further determining, by the RAN node, the target QoS configuration information according to the preset policy, refer to corresponding descriptions in the manner 1. Details are not described again.

Manner 3: The RAN node determines the target QoS configuration information from the plurality of pieces of candidate QoS configuration information based on the current network status and task computing accuracy included in at least one of the plurality of pieces of candidate QoS configuration information.

In a possible implementation, if any piece of candidate QoS configuration information includes one or more of a GFBR, a PDB, a PER, a GBR, or a guaranteed transmission data size, and task computing accuracy, the RAN node determines, as the target QoS configuration information, candidate QoS configuration information, among the plurality of pieces of candidate QoS configuration information, that matches the current network status and that meets a task accuracy constraint condition.

The task accuracy constraint condition is accuracy that a result obtained based on task execution needs to satisfy. For example, the task accuracy constraint condition indicates that average task accuracy is greater than or equal to 90%.

For example, any piece of candidate QoS configuration information includes a PER and task computing accuracy. The RAN node determines, according to the method 1, candidate QoS configuration information that can satisfy the PER of the current network, and sequentially determines whether the candidate QoS configuration information that can satisfy the PER of the current network meets the task accuracy constraint condition. For example, if the RAN node determines, according to the method 1, two pieces of candidate QoS configuration information that can satisfy the PER of the current network, and if the 1st piece of candidate QoS configuration information can meet the task accuracy constraint condition, the RAN node determines the 1st piece of candidate QoS configuration information as the target QoS configuration information. If the 1st piece of candidate QoS configuration information cannot meet the task accuracy constraint condition, the RAN node continues to determine whether the 2nd piece of candidate QoS configuration information meets the task accuracy constraint condition.

It can be understood that the terminal may determine, based on task computing accuracy in candidate QoS configuration information, whether the candidate QoS configuration information meets the task accuracy constraint condition. For example, the RAN node may obtain a ratio of a quantity of times of selecting each piece of candidate QoS configuration information from the plurality of pieces of candidate QoS configuration information within third duration to a total quantity of times of selecting candidate QoS configuration information by the RAN node within the third duration, and determine, based on the ratio and task computing accuracy in the candidate QoS configuration information, whether the candidate QoS configuration information meets the task accuracy constraint condition. The third duration and the first duration may be the same or different, and the third duration and the second duration may be the same or different.

For example, the task accuracy constraint condition indicates that the average task accuracy is greater than or equal to 90%. The RAN node may obtain the ratio, and estimate the average task accuracy based on the ratio and the task computing accuracy included in the candidate QoS configuration information. If the estimated average task accuracy meets the task accuracy constraint condition, for example, the estimated average task accuracy is greater than or equal to 90%, the RAN node determines that the candidate QoS configuration information meets the task accuracy constraint condition. If the estimated average task accuracy does not meet the task accuracy constraint condition, for example, the estimated average task accuracy is less than 90%, the RAN node determines that the candidate QoS configuration information does not meet the task accuracy constraint condition.

The ratio, the task computing accuracy included in the candidate QoS configuration information, and the estimated average task accuracy meet the following formula: $T = \sum_{1}^{N} R_i t_i$ , where T is the estimated average task accuracy, N is a quantity of pieces of the plurality of candidate QoS configuration information, $R_i$ is a ratio of a quantity of times of selecting an ith piece of candidate QoS configuration information by the RAN node within the third duration to the total quantity of times, and $t_i$ is task computing accuracy included in the ith piece of candidate QoS configuration information.

It can be understood that, if a quantity of pieces of candidate QoS configuration information, among the plurality of pieces of candidate QoS configuration information, that matches the current network status and that meets the task accuracy constraint condition is greater than 1, the RAN node may further determine the target QoS configuration information according to a preset policy. For a specific manner of further determining, by the RAN node, the target QoS configuration information according to the preset policy, refer to corresponding descriptions in the manner 1. Details are not described again.

Manner 4: The RAN node determines the target QoS configuration information from the plurality of pieces of candidate QoS configuration information based on the current network status, a parameter that is related to the power consumption of the terminal and that is included in at least one of the plurality of pieces of candidate QoS configuration information, and task computing accuracy.

In a possible implementation, if any piece of candidate QoS configuration information includes one or more of a GFBR, a PDB, a PER, a GBR, or a guaranteed transmission data size, one or more of computing power consumption of the terminal, total power consumption of the terminal, computing energy consumption of the terminal, total energy consumption of the terminal, or transmission power consumption of the terminal, and task computing accuracy, the RAN node determines, as the target QoS configuration information, candidate QoS configuration information, among the plurality of pieces of candidate QoS configuration information, that matches the current network status and that meets a terminal power consumption constraint condition and a task accuracy constraint condition.

For example, any piece of candidate QoS configuration information includes a GBR, average computing power consumption of the terminal, and task computing accuracy. The RAN node determines, according to the method 1, candidate QoS configuration information that can satisfy the GBR of the current network, and sequentially determines whether the candidate QoS configuration information that can satisfy the GBR of the current network meets the terminal power consumption constraint condition and the task accuracy constraint condition. For example, if the RAN node determines, according to the method 1, two pieces of candidate QoS configuration information that can satisfy the GBR of the current network, and if the 1st piece of candidate QoS configuration information can meet the terminal power consumption constraint condition and the task accuracy constraint condition, the RAN node determines the 1st piece of candidate QoS configuration information as the target QoS configuration information. If the 1st piece of candidate QoS configuration information cannot meet the terminal power consumption constraint condition or the task accuracy constraint condition, the RAN node continues to determine whether the 2nd piece of candidate QoS configuration information meets the terminal power consumption constraint condition and the task accuracy constraint condition.

It can be understood that, if a quantity of pieces of candidate QoS configuration information, among the plurality of pieces of candidate QoS configuration information, that matches the current network status and that meets the terminal power consumption constraint condition and the task accuracy constraint condition is greater than 1, the RAN node may further determine the target QoS configuration information according to a preset policy. For a specific manner of further determining, by the RAN node, the target QoS configuration information according to the preset policy, refer to corresponding descriptions in the manner 1. Details are not described again.

Optionally, the RAN node may periodically determine the target QoS configuration information from the plurality of pieces of candidate QoS configuration information based on the current network status. For example, for an uplink 60 FPS (an interframe space is 16.67 ms) video streaming service, the RAN node may determine the target QoS configuration information from the plurality of pieces of candidate QoS configuration information based on the current network status at an interval of 16.67 ms.

It can be understood that, if the target QoS configuration information is different from the candidate QoS configuration information for mapping the QoS flow to the DRB in S403, the RAN node may update, based on the target QoS configuration information, an air interface transmission parameter or a scheduling parameter, for example, a resource configuration, a scheduling priority, a preemption capability, or a preemption vulnerability, that is between the terminal and the RAN node and that is associated with the DRB.

It can be understood that, after determining the target QoS configuration information, the RAN node may transmit data based on the target QoS configuration information.

S405: The RAN node sends first indication information to the terminal and/or a computing node. Correspondingly, the terminal and/or the computing node receive/receives the first indication information from the RAN node.

In this application, the computing node may be the computing node 203 in the communication system 20 shown in FIG. 2.

In this application, the first indication information indicates a parameter related to the target QoS configuration information.

In a possible implementation, after receiving the first indication information, the terminal and/or the computing node may determine, based on the first indication information, the parameter related to the target QoS configuration information, and then determine service parameter information based on the parameter related to the target QoS configuration information, to provide a better service for a user.

For example, the parameter related to the target QoS configuration information has a correspondence with the service parameter information. In this way, the terminal and/or the computing node can determine the service parameter information based on the correspondence. For example, the service parameter information may include at least one of the following: a bit rate, a code rate, a frame rate, a resolution, encoding/decoding (or compression/decompression) parameter information of a multimedia service, or task split point information. Optionally, information about the correspondence is stored on the terminal, or is obtained by the terminal from another device.

In another possible implementation, after receiving the first indication information, the terminal and/or the computing node may determine, based on the first indication information, a specific one of the plurality of pieces of candidate QoS configuration information that is the target QoS configuration information, and then determine service parameter information based on the target QoS configuration information, to provide a better service for a user.

For example, the target QoS configuration information has a correspondence with the service parameter information. In this way, the terminal and/or the computing node can determine the service parameter information based on the correspondence. Optionally, information about the correspondence is stored on the terminal, or is obtained by the terminal from another device. Optionally, each of the plurality of pieces of candidate QoS configuration information may have a correspondence with the service parameter information.

It can be understood that, if the service parameter information includes the bit rate, the terminal and/or the computing node may transmit data based on the bit rate. If the service parameter information includes the code rate, the terminal and/or the computing node may transmit data based on the code rate. If the service parameter information includes the frame rate, the terminal and/or the computing node may transmit data based on the frame rate. If the service parameter information includes the resolution, the terminal and/or the computing node may process data based on the resolution. If the service parameter information includes the encoding/decoding (or compression/decompression) parameter information of the multimedia service, the terminal and/or the computing node may process data based on the encoding/decoding (or compression/decompression) parameter information of the multimedia service. If the service parameter information includes the task split point information, the terminal and/or the computing node may perform a task based on a task split point indicated by the task split point information.

It can be understood that, if the target QoS configuration information determined in S404 is the same as previously determined target QoS configuration information, the terminal or the computing node may not adjust the service parameter information. Therefore, the RAN node may not send the first indication information to the terminal or the computing node, to reduce signaling overheads. If the target QoS configuration information determined in S404 is different from previously determined target QoS configuration information, the terminal or the computing node may need to adjust the service parameter information. Therefore, the RAN node may send the first indication information to the terminal and/or the computing node, so that the terminal and/or the computing node determine/determines, based on the first indication information, the parameter related to the target QoS configuration information, and then adjust/adjusts the service parameter information.

Optionally, for an uplink service, the RAN node sends the first indication information to the terminal, without sending the first indication information to the computing node. Optionally, after receiving the first indication information, the terminal may indicate, to the computing node, the service parameter information corresponding to the parameter related to the target QoS configuration information.

Optionally, for a downlink service, the RAN node sends the first indication information to the computing node, without sending the first indication information to the terminal. Optionally, after receiving the first indication information, the computing node may indicate, to the terminal, the service parameter information corresponding to the parameter related to the target QoS configuration information.

In a possible design, the parameter related to the target QoS configuration information may include at least one type of information included in the target QoS configuration information. For example, the parameter related to the target QoS configuration information includes at least one of the following: an identifier of the target QoS configuration information, one or more of parameters that are included in the target QoS configuration information and that are related to the power consumption of the terminal, task computing accuracy included in the target QoS configuration information, a GFBR included in the target QoS configuration information, a PDB included in the target QoS configuration information, a PER included in the target QoS configuration information, a GBR included in the target QoS configuration information, or a guaranteed transmission data size included in the target QoS configuration information.

In a possible design, the first indication information may include the parameter related to the target QoS configuration information, to indicate the parameter related to the target QoS configuration information. To be specific, the first indication information may include at least one of the following: the identifier of the target QoS configuration information, one or more of the parameters that are included in the target QoS configuration information and that are related to the power consumption of the terminal, the task computing accuracy included in the target QoS configuration information, the GFBR included in the target QoS configuration information, the PDB included in the target QoS configuration information, the PER included in the target QoS configuration information, the GBR included in the target QoS configuration information, or the guaranteed transmission data size included in the target QoS configuration information.

It can be understood that, if the first session includes a plurality of QoS flows that support a plurality of pieces of candidate QoS configuration information, the first indication information may further indicate a parameter, related to the target QoS configuration information, of each QoS flow. Parameters, related to the target QoS configuration information, of different QoS flows may correspond to same or different service parameter information. Therefore, the first indication information may further include a related identifier of a QoS flow corresponding to the target QoS configuration information. The related identifier of the QoS flow may be an identifier of a DRB (DRB identifier) to which the QoS flow is mapped on an air interface, a logical channel identifier (logical channel identifier, LCID), the identifier of the first session, or the like.

It can be understood that a process of sending the first indication information by the RAN node to the terminal is different from a process of sending the first indication information by the RAN node to the computing node. The processes are separately described below.

First, a process of sending the first indication information by the RAN node to the terminal and determining the service parameter information by the terminal based on the first indication information is described.

In a possible implementation, the first indication information is carried in an RRC message, a PDCP control PDU, or a MAC control element (control element, MAC CE). To be specific, the RAN node can quickly indicate, to the terminal through an air interface, the parameter related to the target QoS configuration information. The terminal may respond to a change in an air interface network status in a timely manner, and then determine, based on the parameter related to the target QoS configuration information, service parameter information that matches a current network status. For example, the terminal may determine, in a timely manner based on the parameter related to the target QoS configuration information, a task split point that matches the current network status. In this way, successful transmission of intermediate data obtained by the terminal by performing a task based on the task split point does not need to be ensured by consuming a large quantity of air interface transmission resources, so that a quantity of terminals that access the RAN node is increased. It can be understood that the task split point may further match a power consumption or energy consumption requirement of the terminal, to avoid high power consumption or energy consumption when the terminal performs the task based on the task split point. It can be understood that the task split point may further match task computing accuracy, to avoid low precision of the task or an inaccurate execution result.

As described above, functions of the RAN node may be split. For example, the RAN node may be split into a CU and a DU, or may be split into an nrt-RIC, a CU, and a DU. Further, the CU may be further split into a CU-CP and a CU-UP. The RRC message or the PDCP control PDU may be sent by the CU, and the MAC CE may be sent by the DU. Different RAN node splitting scenarios are separately described below.

In a possible implementation, the RAN node includes a CU and a DU. If the target QoS configuration information is determined by the CU, the CU sends the first indication information to the DU through an F1 interface. In this way, the DU can send the first indication information to the terminal, where the first indication information may be carried in the MAC CE message sent by the DU. A CU and a DU shown in FIG. 1B are used as an example. An RRC layer or a PDCP layer of the CU sends the first indication information to an RLC layer of the DU through an F1 interface. After receiving the first indication information, the RLC layer of the DU delivers the first indication information to a MAC layer. After obtaining the first indication information, the MAC layer of the DU sends a MAC CE to the terminal. The MAC CE includes the first indication information. If the target QoS configuration information is determined by the DU, the DU sends the first indication information to the CU. In this way, the CU can send the first indication information to the terminal, where the first indication information may be carried in an RRC message or a PDCP control PDU message sent by the CU. The CU and the DU shown in FIG. 1B are used as an example. The RLC layer of the DU sends the first indication information to the PDCP layer of the CU through the F1 interface. After receiving the first indication information, the PDCP layer of the CU sends a PDCP control PDU to the terminal, where the PDCP control PDU includes the first indication information. Alternatively, after receiving the first indication information, the PDCP layer of the CU delivers the first indication information to the RRC layer. After obtaining the first indication information, the RRC layer of the CU sends an RRC message to the terminal, where the RRC message includes the first indication information. It can be understood that the RRC message may be further included in a PDCP data PDU message at the PDCP layer. It should be understood that, if the target QoS configuration information is determined by the DU, in S403, the CU receives the plurality of pieces of candidate QoS configuration information from the first network element, and sends the plurality of pieces of candidate QoS configuration information to the DU, so that the DU determines the target QoS configuration information from the plurality of pieces of candidate QoS configuration information.

In a possible implementation, the RAN node includes a CU and a DU, and the CU is further split into a CU-CP and a CU-UP. If the target QoS configuration information is determined by the CU-CP, the CU-CP sends the first indication information to the CU-UP. In this way, the CU-UP can send the first indication information to the terminal. For example, the CU-UP uses a PDCP PDU to carry the first indication information to be sent to the terminal, where the PDCP PDU may be a PDCP control PDU. If the target QoS configuration information is determined by the DU, the DU first sends the first indication information to the CU, and then the CU-CP sends the received first indication information to the CU-UP. In this way, the CU-UP can send the first indication information to the terminal. For example, the CU-UP uses a PDCP PDU to carry the first indication information to be sent to the terminal, where the PDCP PDU may be a PDCP control PDU.

In a possible implementation, the RAN node includes an nrt-RIC, a CU, and a DU. If the target QoS configuration information is determined by the nrt-RIC, the nrt-RIC sends the first indication information to the DU, so that the DU sends the first indication information to the terminal. For example, the DU uses a MAC CE to carry the first indication information to be sent to the terminal. Alternatively, the nrt-RIC sends the first indication information to the CU, so that the CU sends the first indication information to the terminal. For example, the CU directly uses an RRC message to carry the first indication information to be sent to the terminal; or uses a PDCP PDU to carry the first indication information to be sent to the terminal, where the PDCP PDU may be a PDCP control PDU.

In a possible implementation, the RAN node includes an nrt-RIC, a CU, and a DU, and the CU is further split into a CU-CP and a CU-UP. If the target QoS configuration information is determined by the nrt-RIC, the nrt-RIC sends the first indication information to the CU-UP. In this way, the CU-UP can send the first indication information to the terminal. For example, the CU-UP uses a PDCP PDU to carry the first indication information to be sent to the terminal, where the PDCP PDU may be a PDCP control PDU. Alternatively, the nrt-RIC sends the first indication information to the CU-CP. In this way, the CU-CP can send the first indication information to the terminal. For example, the CU-CP uses an RRC message to carry the first indication information to be sent to the terminal. Alternatively, the nrt-RIC first sends the first indication information to the CU-CP, and then the CU-CP sends the first indication information to the CU-UP. In this way, the CU-UP can send the first indication information to the terminal. For example, the CU-UP uses a PDCP PDU to carry the first indication information to be sent to the terminal.

It can be understood that information about an association relationship between the parameter related to the target QoS configuration information and the service parameter information is stored on the terminal. Therefore, the terminal may determine, based on the first indication information and the information about the association relationship, the service parameter information corresponding to the parameter related to the target QoS configuration information.

For example, the first indication information includes the identifier of the target QoS configuration information, and information about an association relationship between an identifier of candidate QoS configuration information and a task split point is stored on the terminal. The terminal queries, from the information about the association relationship based on the identifier of the target QoS configuration information, for a task split point associated with the identifier of the target QoS configuration information, and determines the found task split point as a current task split point. Subsequently, the terminal may perform a task based on the current task split point to obtain intermediate data.

For example, the first indication information includes the GFBR and the PDB that are included in the target QoS configuration information, and information about an association relationship between a GFBR and a PDB and a task split point is stored on the terminal. The terminal queries, from the information about the association relationship based on the GFBR and the PDB that are included in the target QoS configuration information, a task split point associated with the GFBR and the PDB that are included in the target QoS configuration information, and determines the found task split point as a current task split point. Subsequently, the terminal may perform a task based on the current task split point to obtain intermediate data.

For example, the first indication information includes the GFBR and the PDB that are included in the target QoS configuration information, and information about an association relationship between a GFBR and a PDB and a code rate is stored on the terminal. The terminal queries, from the information about the association relationship based on the GFBR and the PDB that included in the target QoS configuration information, a code rate associated with the GFBR and the PDB that are included in the target QoS configuration information, and determines the found code rate as a current code rate. Subsequently, the terminal may transmit data based on the current code rate.

For example, the first indication information includes the PER included in the target QoS configuration information, and information about an association relationship between a PER and a PDB and a resolution is stored on the terminal. The terminal queries, from the information about the association relationship based on the PER included in the target QoS configuration information, a resolution associated with the PER included in the target QoS configuration information, and determines the found resolution as a current resolution. Subsequently, the terminal may process data based on the current resolution.

Optionally, after receiving the first indication information, the terminal delivers the first indication information to an application layer of the terminal. The application layer determines the service parameter information based on the first indication information, and processes data based on the service parameter information.

Optionally, the terminal further indicates, to the computing node, the service parameter information corresponding to the parameter related to the target QoS configuration information. For example, the terminal sends second data to the computing node. Correspondingly, the computing node receives the second data. The second data includes second indication information, and the second indication information indicates the service parameter information corresponding to the parameter related to the target QoS configuration information. Information included in the second indication information may be the same as or different from that included in the first indication information. This is not limited. Optionally, the second data further includes intermediate data obtained by the terminal by performing the task based on the task split point indicated by the task split point information in the service parameter information. Optionally, the second indication information may be carried in a header (header) of the second data, and is indicated by a special field in the header.

A process of sending the first indication information by the RAN node to the computing node and determining, by the computing node based on the first indication information, a task split point corresponding to the target QoS configuration information is described below.

In a possible implementation, the RAN node sends the first indication information to an SMF network element through an AMF network element. After receiving the first indication information, the SMF network element sends the first indication information to the computing node through an AF network element.

In another possible implementation, the RAN node sends first data to a second network element in the core network in which the first network element is located. Correspondingly, the second network element receives the first data. A tunneling protocol-user plane part (for example, a user plane part of a general packet radio service (general packet radio service, GPRS) tunneling protocol (user plane part of GPRS tunneling protocol, GTP-U)) header of the first data includes the first indication information, to quickly send the first indication information. After receiving the first data, the second network element sends third indication information. The third indication information indicates the parameter related to the target QoS configuration information. For example, after receiving the first data, the second network element detects the GTP-U header of the first data to obtain the first indication information, and then sends the third indication information to the computing node, so that the computing node determines the service parameter information. Content included in the third indication information is the same as or different from that included in the first indication information.

It can be understood that the first indication information is quickly sent, so that the RAN node can indicate, to the computing node as soon as possible, the parameter related to the target QoS configuration information. In this way, the computing node can respond to a change in an air interface network status in a timely manner, and then determine, based on the parameter related to the target QoS configuration information, service parameter information that matches a current network status. For example, the computing node may determine, in a timely manner based on the parameter related to the target QoS configuration information, a task split point that matches the current network status. In this way, successful transmission of intermediate data obtained by the terminal by performing a task based on the task split point does not need to be ensured by consuming a large quantity of air interface transmission resources, so that a quantity of terminals that access the RAN node is increased. It can be understood that the task split point may further match a power consumption or energy consumption requirement of the terminal, to avoid high power consumption or energy consumption when the terminal performs the task based on the task split point. It can be understood that the task split point may further match task computing accuracy, to avoid low precision of the task or an inaccurate execution result.

Optionally, the first data is uplink data of a QoS flow that supports a plurality of pieces of candidate QoS configuration information, or the first data is dummy (dummy) uplink data generated by the RAN node to transmit the first indication information.

It can be understood that the second network element is the same as or different from the first network element. For example, the second network element is different from the first network element, and the second network element is a UPF network element. After obtaining the first indication information, the second network element sends the third indication information to the computing node through an application programming interface (application programming interface, API) in an NEF network element or a local NEF (local-NEF) network element, to quickly send the third indication information.

As described above, functions of the RAN node may be split. For example, the RAN node may be split into a CU and a DU, or may be split into an nrt-RIC, a CU, and a DU. Further, the CU may be further split into a CU-CP and a CU-UP. Different RAN node splitting scenarios are separately described below.

In a possible implementation, the RAN node includes a CU and a DU. If the target QoS configuration information is determined by the DU, the DU sends the first indication information to the CU. In this way, the CU can send the first indication information to the computing node. It should be understood that, if the target QoS configuration information is determined by the DU, in S403, the CU receives the plurality of pieces of candidate QoS configuration information from the first network element, and sends the plurality of pieces of candidate QoS configuration information to the DU, so that the DU determines the target QoS configuration information from the plurality of pieces of candidate QoS configuration information.

In a possible implementation, the RAN node includes a CU and a DU, and the CU is further split into a CU-CP and a CU-UP. If the target QoS configuration information is determined by the DU, the DU sends the first indication information to the CU-UP through the CU-CP, or the DU sends the first indication information to the CU-UP through an F1-u interface (for example, the first indication information is carried in a GTP-U header of uplink data on the F1-u interface). In this way, the CU-UP can send the first indication information to the computing node.

In a possible implementation, the RAN node includes an nrt-RIC, a CU, and a DU. If the target QoS configuration information is determined by the nrt-RIC, the nrt-RIC sends the first indication information to the CU, so that the CU sends the first indication information to the computing node.

In a possible implementation, the RAN node includes an nrt-RIC, a CU, and a DU, and the CU is further split into a CU-CP and a CU-UP. If the target QoS configuration information is determined by the nrt-RIC, the nrt-RIC sends the first indication information to the CU-UP. In this way, the CU-UP can use a GTP-U header to carry the first indication information, and send the GTP-U header to the computing node.

It can be understood that information about an association relationship between the parameter related to the target QoS configuration information and the service parameter information is stored on the computing node. Therefore, the computing node may determine, based on the first indication information and the information about the association relationship, the service parameter information corresponding to the parameter related to the target QoS configuration information. This process is similar to the process of determining, by the terminal, the service parameter information corresponding to the parameter related to the target QoS configuration information. Refer to the foregoing descriptions of the process of determining, by the terminal, the service parameter information corresponding to the target QoS configuration information. Details are not described again.

Optionally, the computing node further indicates, to the terminal, the service parameter information corresponding to the parameter related to the target QoS configuration information. For example, the computing node sends third data to the terminal. Correspondingly, the terminal receives the third data. The third data includes fourth indication information, and the fourth indication information indicates the service parameter information corresponding to the parameter related to the target QoS configuration information. Content included in the fourth indication information may be the same as or different from that included in the first indication information. This is not limited. Optionally, the third data further includes intermediate data obtained by the computing node by performing the task based on the task split point indicated by the task split point information in the service parameter information.

The actions of the terminal, the first network element, the RAN node, the second network element, or the computing node in S401 to S405 may be performed by the processor 301 in the communication apparatus 30 shown in FIG. 3 by invoking the application program code stored in the memory 303. This is not limited in this application.

According to the method shown in FIG. 4, the RAN node may obtain the plurality of pieces of candidate QoS configuration information from the first network element in the core network, and determine the target QoS configuration information from the plurality of pieces of candidate QoS configuration information based on the current network status, to match a current communication scenario. Subsequently, the RAN node further indicates, to the terminal and/or the computing node, the parameter related to the target QoS configuration information. In this way, the terminal and/or the computing node can determine, based on the indication of the RAN node, information associated with the parameter, for example, the service parameter information corresponding to the parameter, so that the terminal and/or the computing node can adjust the service parameter information in a timely manner in response to a change in an air interface network status. It can be understood that, when the candidate QoS configuration information includes a parameter related to the power consumption of the terminal, when determining the target QoS configuration information, the RAN node may consider the power consumption or the energy consumption of the terminal in addition to the current network status, to control the power consumption or the energy consumption of the terminal, avoid overheat of the terminal or impact on standby time of the terminal, and therefore improve user experience. In this case, the method shown in FIG. 4 is applicable to a communication scenario in which a requirement is imposed on power consumption or energy consumption of a terminal. When the candidate QoS configuration information includes task computing accuracy, when determining the target QoS configuration information, the RAN node may consider the task computing accuracy in addition to the current network status, to ensure accuracy of a task execution result. In this case, the method shown in FIG. 4 is applicable to a communication scenario in which a requirement is imposed on task computing accuracy.

It can be understood that the method provided in this application is applicable not only to the communication scenario in which a requirement is imposed on power consumption or energy consumption of a corresponding terminal and/or the communication scenario in which a requirement is imposed on task computing accuracy. Based on the idea of the method provided in this application, information related to any communication scenario may be added to the candidate QoS configuration information. When determining the target QoS configuration information, the RAN node may consider the information, so that the determined target QoS configuration information is suitable for the communication scenario.

It can be understood that, in the foregoing embodiments, support for candidate QoS configuration information is described by using a QoS flow as a granularity. During specific application, support for candidate QoS configuration information may alternatively be described by using another granularity, for example, a session granularity, a slice granularity, or a task granularity. This is not limited.

The foregoing mainly describes the solutions provided in this application from a perspective of interaction between network elements. Correspondingly, this application further provides a communication apparatus. The communication apparatus may be the RAN node in the foregoing method embodiments, or an apparatus including the foregoing RAN node, or a component that can be used in the RAN node. Alternatively, the communication apparatus may be the terminal in the foregoing method embodiments, or an apparatus including the foregoing terminal, or a component that can be used in the terminal. Alternatively, the communication apparatus may be the first network element in the foregoing method embodiments, or an apparatus including the first network element, or a component that can be used in the first network element. Alternatively, the communication apparatus may be the second network element in the foregoing method embodiments, or an apparatus including the second network element, or a component that can be used in the second network element. Alternatively, the communication apparatus may be the computing node in the foregoing method embodiments, or an apparatus including the computing node, or a component that can be used in the computing node. It can be understood that, to implement the foregoing functions, the RAN node, the terminal, the first network element, the second network element, the computing node, or the like includes a corresponding hardware structure and/or software module for performing the functions. A person skilled in the art should be easily aware that, in combination with units and algorithm operations in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application. However, it should not be considered that the implementation goes beyond the scope of this application.

In this application, the RAN node, the terminal, the first network element, the second network element, the computing node, or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It can be understood that division into the modules in this application is an example, and is merely logical function division. During actual implementation, another division manner may be used.

For example, when functional modules are divided in an integrated manner, FIG. 5 is a diagram of a structure of a communication apparatus 50. The communication apparatus 50 includes an interface module 501. Optionally, the communication apparatus 50 further includes a processing module 502. The interface module 501 may also be referred to as an interface unit, and is configured to perform a sending operation and a receiving operation. For example, the interface module may be an interface circuit, a transceiver device, a transceiver, or a communication interface. The processing module 502 may also be referred to as a processing unit, and is configured to perform an operation other than the sending operation and the receiving operation. For example, the processing module may be a processing circuit or a processor.

In some embodiments, the communication apparatus 50 may further include a storage module (not shown in FIG. 5), configured to store program instructions and data.

For example, the communication apparatus 50 is configured to implement functions of a second network element. The communication apparatus 50 is, for example, the second network element in the embodiment shown in FIG. 4.

The interface module 501 is configured to receive first data from a radio access network node. A tunneling protocol-user plane header of the first data includes first indication information, and the first indication information indicates a parameter related to target quality of service configuration information.

The interface module 501 is further configured to send third indication information. The third indication information indicates the parameter related to the target quality of service configuration information.

In a possible implementation, the target quality of service configuration information includes a parameter related to power consumption of a terminal.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

When the communication apparatus 50 is configured to implement the functions of the second network element, for other functions that can be implemented by the communication apparatus 50, refer to related descriptions in the embodiment shown in FIG. 4. Details are not described again.

Alternatively, for example, the communication apparatus 50 is configured to implement functions of a RAN node. The communication apparatus 50 is, for example, the RAN node in the embodiment shown in FIG. 4.

The interface module 501 is configured to receive a plurality of pieces of candidate quality of service configuration information from a first network element in a core network. Any one of the plurality of pieces of candidate quality of service configuration information includes a parameter related to power consumption of a terminal. For example, the interface module 501 may be configured to perform S403.

The processing module 502 is configured to determine target quality of service configuration information from the plurality of pieces of candidate quality of service configuration information based on a current network status and the parameter related to the power consumption of the terminal. For example, the processing module 502 may be configured to perform S404.

The interface module 501 is further configured to send first indication information, where the first indication information indicates a parameter related to the target quality of service configuration information. For example, the interface module 501 may be configured to perform S405.

In a possible implementation, the parameter related to the target quality of service configuration information has a correspondence with at least one of a task split point, a bit rate, a code rate, a frame rate, or a resolution.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

In a possible implementation, the any one piece of candidate quality of service configuration information further includes at least one of the following: an identifier of the candidate quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: an identifier of the target quality of service configuration information, a parameter that is included in the target quality of service configuration information and that is related to the power consumption of the terminal, task computing accuracy, a guaranteed flow bit rate, a packet delay budget, a packet error rate, a guaranteed bit rate, or a guaranteed transmission data size.

In a possible implementation, the interface module 501 is specifically configured to send first data to a second network element in the core network, where a tunneling protocol-user plane header of the first data includes the first indication information.

In a possible implementation, the interface module 501 is specifically configured to send the first indication information to the terminal, where the first indication information is carried in a radio resource control message or a media access control control element.

In a possible implementation, the communication apparatus 50 is a central unit included in a radio access network node, and the interface module 501 is specifically configured to send first indication information to a distributed unit included in the radio access network node; or the communication apparatus 50 is a distributed unit included in a radio access network node, and the interface module 501 is specifically configured to send first indication information to a central unit included in the radio access network node.

In a possible implementation, the current network status includes at least one of the following: a guaranteed flow bit rate of a current network, a packet delay budget of a current network, a packet error rate of a current network, a guaranteed bit rate of a current network, a guaranteed transmission data size of a current network, channel state information of a current network, buffer status report information of a current network, or congestion status information of a current network.

When the communication apparatus 50 is configured to implement the functions of the RAN node, for other functions that can be implemented by the communication apparatus 50, refer to related descriptions in the embodiment shown in FIG. 4. Details are not described again.

Alternatively, for example, the communication apparatus 50 is configured to implement functions of a terminal. The communication apparatus 50 is, for example, the terminal in the embodiment shown in FIG. 4.

The interface module 501 is configured to send information about a first session to a first network element in a core network. The information about the first session indicates that the first session corresponds to a plurality of pieces of candidate quality of service configuration information. For example, the interface module 501 may be configured to perform S401.

The interface module 501 is further configured to receive first indication information from a radio access network node. For example, the interface module 501 may be configured to perform S405.

The processing module 502 is configured to determine, based on the first indication information, a parameter related to target quality of service configuration information, where the target quality of service configuration information includes a parameter related to power consumption of the terminal, and the target quality of service configuration information is included in the plurality of pieces of candidate quality of service configuration information.

In a possible implementation, the processing module 502 is further configured to determine at least one of a task split point, a bit rate, a code rate, a frame rate, or a resolution that corresponds to the parameter related to the target quality of service configuration information.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

In a possible implementation, the first indication information is carried in a radio resource control message or a media access control control element.

In a possible implementation, the interface module 501 is further configured to send second data, where the second data includes second indication information, and the second indication information indicates at least one of the task split point, the bit rate, the code rate, the frame rate, or the resolution that corresponds to the parameter related to the target quality of service configuration information.

When the communication apparatus 50 is configured to implement the functions of the terminal, for other functions that can be implemented by the communication apparatus 50, refer to related descriptions in the embodiment shown in FIG. 4. Details are not described again.

Alternatively, for example, the communication apparatus 50 is configured to implement functions of a first network element. The communication apparatus 50 is, for example, the first network element in the embodiment shown in FIG. 4.

The interface module 501 is configured to receive information about a first session from a terminal. The information about the first session indicates that the first session corresponds to a plurality of pieces of candidate quality of service configuration information. For example, the interface module 501 may be configured to perform S401.

The processing module 502 is configured to obtain the plurality of pieces of candidate quality of service configuration information. Any one of the plurality of pieces of candidate quality of service configuration information includes a parameter related to power consumption of the terminal. For example, the processing module 502 may be configured to perform S402.

The interface module 501 is further configured to send the plurality of pieces of candidate quality of service configuration information to a radio access network node. For example, the interface module 501 may be configured to perform S403.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

In a possible implementation, the any one piece of candidate quality of service configuration information further includes at least one of the following: an identifier of the candidate quality of service configuration information, task computing accuracy, a guaranteed flow bit rate, a packet delay budget, a packet error rate, a guaranteed bit rate, or a guaranteed transmission data size.

When the communication apparatus 50 is configured to implement the functions of the first network element, for other functions that can be implemented by the communication apparatus 50, refer to related descriptions in the embodiment shown in FIG. 4. Details are not described again.

Alternatively, for example, the communication apparatus 50 is configured to implement functions of a computing node. The communication apparatus 50 is, for example, the computing node in the embodiment shown in FIG. 4.

The interface module 501 is configured to receive first indication information from a radio access network node. For example, the interface module 501 may be configured to perform S405.

The processing module 502 is configured to determine, based on the first indication information, a parameter related to target quality of service configuration information, where the target quality of service configuration information includes a parameter related to power consumption of a terminal.

In a possible implementation, the processing module 502 is further configured to determine at least one of a task split point, a bit rate, a code rate, a frame rate, or a resolution that corresponds to the parameter related to the target quality of service configuration information.

In a possible implementation, the parameter related to the power consumption of the terminal includes at least one of the following: computing power consumption of the terminal, total power consumption of the terminal, computing energy consumption of the terminal, total energy consumption of the terminal, or transmission power consumption of the terminal.

In a possible implementation, the target quality of service configuration information further includes at least one of the following: an identifier of the target quality of service configuration information, task computing accuracy, a guaranteed flow bit rate, a packet delay budget, a packet error rate, a guaranteed bit rate, or a guaranteed transmission data size.

In a possible implementation, the first indication information includes at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

In a possible implementation, the interface module 501 is further configured to send third data, where the third data includes fourth indication information, and the fourth indication information indicates at least one of the task split point, the bit rate, the code rate, the frame rate, or the resolution that corresponds to the parameter related to the target quality of service configuration information.

When the communication apparatus 50 is configured to implement the functions of the computing node, for other functions that can be implemented by the communication apparatus 50, refer to related descriptions in the embodiment shown in FIG. 4. Details are not described again.

In a simple embodiment, a person skilled in the art may figure out that the communication apparatus 50 may be in the form shown in FIG. 3. For example, the processor 301 in FIG. 3 may invoke the computer-executable instructions stored in the memory 303, to enable the communication apparatus 50 to perform the method in the foregoing method embodiments.

For example, functions/implementation processes of the interface module 501 and the processing module 502 in FIG. 5 may be implemented by the processor 301 in FIG. 3 by invoking the computer-executable instructions stored in the memory 303. Alternatively, a function/implementation process of the processing module 502 in FIG. 5 may be implemented by the processor 301 in FIG. 3 by invoking the computer-executable instruction stored in the memory 303, and a function/implementation process of the interface module 501 in FIG. 5 may be implemented by the communication interface 304 in FIG. 3.

It can be understood that one or more of the foregoing modules or units may be implemented by using software, hardware, or a combination thereof. When any one of the foregoing modules or units is implemented by using software, the software exists in a form of computer program instructions, and is stored in a memory, and a processor may be configured to execute the program instructions and implement the foregoing method processes. The processor may be disposed in a SoC (system-on-a chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a special logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may perform the foregoing method processes by running necessary software or without relying on software.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may alternatively include both an internal storage unit and an external storage device of the communication apparatus. The computer-readable storage medium is configured to store the computer program, and other programs and data that are needed for the communication apparatus. The computer-readable storage medium may be further configured to temporarily store data that has been output or is to be output.

Optionally, this application further provides a computer program product. All or some of the processes in the foregoing method embodiments may be implemented by a computer program instructing related hardware. The program may be stored in the computer program product. When the program is executed, the processes of the foregoing method embodiments may be included.

Optionally, this application further provides computer instructions. All or some of the processes in the foregoing method embodiments may be implemented by the computer instructions instructing related hardware (for example, a computer, a processor, a RAN node, a terminal, a first network element, a second network element, or a computing node). The program may be stored in the computer-readable storage medium or the computer program product.

Optionally, this application further provides a communication system, including the RAN node and the first network element in the foregoing embodiments. Optionally, the communication system further includes a computing node and/or a terminal.

Based on the descriptions of the foregoing implementations, a person skilled in the art can clearly understand that, for ease and brevity of description, division into the foregoing functional modules is merely used as an example for description. During actual application, the foregoing functions may be allocated to different functional modules for implementation according to a requirement. To be specific, an inner structure of an apparatus is divided into different functional modules to implement all or some of the functions described above.

In several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A communication method, wherein the method comprises:

   receiving a plurality of pieces of candidate quality of service configuration information from a first network element in a core network, wherein any one of the plurality of pieces of candidate quality of service configuration information comprises a parameter related to power consumption of a terminal;
   determining target quality of service configuration information from the plurality of pieces of candidate quality of service configuration information based on a current network status and the parameter related to the power consumption of the terminal; and
   sending first indication information, wherein the first indication information indicates a parameter related to the target quality of service configuration information.

2. The method according to claim 1, wherein the parameter related to the target quality of service configuration information has a correspondence with at least one of a task split point, a bit rate, a code rate, a frame rate, or a resolution.

3. The method according to claim 1 or 2, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

4. The method according to any one of claims 1 to 3, wherein the any one piece of candidate quality of service configuration information further comprises at least one of the following: an identifier of the candidate quality of service configuration information, task computing accuracy, a guaranteed flow bit rate, a packet delay budget, a packet error rate, a guaranteed bit rate, or a guaranteed transmission data size.

5. The method according to claim 4, wherein the first indication information comprises at least one of the following: an identifier of the target quality of service configuration information, a parameter that is comprised in the target quality of service configuration information and that is related to the power consumption of the terminal, task computing accuracy, a guaranteed flow bit rate, a packet delay budget, a packet error rate, a guaranteed bit rate, or a guaranteed transmission data size.

6. The method according to any one of claims 1 to 5, wherein sending the first indication information comprises: sending first data to a second network element in the core network, wherein a tunneling protocol-user plane header of the first data comprises the first indication information.

7. The method according to any one of claims 1 to 5, wherein sending the first indication information comprises: sending the first indication information to the terminal, wherein the first indication information is carried in a radio resource control message or a media access control control element.

8. The method according to any one of claims 1 to 7, wherein

the method is applied to a central unit comprised in a radio access network node, and sending the first indication information comprises: sending the first indication information to a distributed unit comprised in the radio access network node; or
the method is applied to a distributed unit comprised in a radio access network node, and sending the first indication information comprises: sending the first indication information to a central unit comprised in the radio access network node.

9. The method according to any one of claims 1 to 8, wherein the current network status comprises at least one of the following: a guaranteed flow bit rate of a current network, a packet delay budget of a current network, a packet error rate of a current network, a guaranteed bit rate of a current network, a guaranteed transmission data size of a current network, channel state information of a current network, buffer status report information of a current network, or congestion status information of a current network.

10. A communication method, wherein the method comprises:

sending information about a first session to a first network element in a core network, wherein the information about the first session indicates that the first session corresponds to a plurality of pieces of candidate quality of service configuration information;
receiving first indication information from a radio access network node; and
determining, based on the first indication information, a parameter related to target quality of service configuration information, wherein the target quality of service configuration information comprises a parameter related to power consumption of a terminal, and the target quality of service configuration information is comprised in the plurality of pieces of candidate quality of service configuration information.

11. The method according to claim 10, wherein the method further comprises:
determining at least one of a task split point, a bit rate, a code rate, a frame rate, or a resolution that corresponds to the parameter related to the target quality of service configuration information.

12. The method according to claim 10 or 11, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

13. The method according to any one of claims 10 to 12, wherein the target quality of service configuration information further comprises at least one of the following: an identifier of the target quality of service configuration information, task computing accuracy, a guaranteed flow bit rate, a packet delay budget, a packet error rate, a guaranteed bit rate, or a guaranteed transmission data size.

14. The method according to claim 13, wherein the first indication information comprises at least one of the following: the identifier of the target quality of service configuration information, the parameter related to the power consumption of the terminal, the task computing accuracy, the guaranteed flow bit rate, the packet delay budget, the packet error rate, the guaranteed bit rate, or the guaranteed transmission data size.

15. The method according to any one of claims 10 to 14, wherein the first indication information is carried in a radio resource control message or a media access control control element.

16. The method according to any one of claims 10 to 14, wherein the method further comprises:
sending second data, wherein the second data comprises second indication information, and the second indication information indicates at least one of the task split point, the bit rate, the code rate, the frame rate, or the resolution that corresponds to the parameter related to the target quality of service configuration information.

17. A communication method, wherein the method comprises:

receiving information about a first session from a terminal, wherein the information about the first session indicates that the first session corresponds to a plurality of pieces of candidate quality of service configuration information;
obtaining the plurality of pieces of candidate quality of service configuration information, wherein any one of the plurality of pieces of candidate quality of service configuration information comprises a parameter related to power consumption of the terminal; and
sending the plurality of pieces of candidate quality of service configuration information to a radio access network node.

18. The method according to claim 17, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

19. The method according to claim 17 or 18, wherein the any one piece of candidate quality of service configuration information further comprises at least one of the following: an identifier of the candidate quality of service configuration information, task computing accuracy, a guaranteed flow bit rate, a packet delay budget, a packet error rate, a guaranteed bit rate, or a guaranteed transmission data size.

20. A communication apparatus, wherein the communication apparatus comprises an interface module and a processing module, wherein

the receiving module is configured to receive a plurality of pieces of candidate quality of service configuration information from a first network element in a core network, wherein any one of the plurality of pieces of candidate quality of service configuration information comprises a parameter related to power consumption of a terminal;
the processing module is configured to determine target quality of service configuration information from the plurality of pieces of candidate quality of service configuration information based on a current network status and the parameter related to the power consumption of the terminal; and
the interface module is further configured to send first indication information, wherein the first indication information indicates a parameter related to the target quality of service configuration information.

21. The communication apparatus according to claim 20, wherein the parameter related to the target quality of service configuration information has a correspondence with at least one of a task split point, a bit rate, a code rate, a frame rate, or a resolution.

22. The communication apparatus according to claim 20 or 21, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

23. The communication apparatus according to any one of claims 20 to 22, wherein the any one piece of candidate quality of service configuration information further comprises at least one of the following: an identifier of the candidate quality of service configuration information, task computing accuracy, a guaranteed flow bit rate, a packet delay budget, a packet error rate, a guaranteed bit rate, or a guaranteed transmission data size.

24. The communication apparatus according to claim 23, wherein the first indication information comprises at least one of the following: an identifier of the target quality of service configuration information, a parameter that is comprised in the target quality of service configuration information and that is related to the power consumption of the terminal, task computing accuracy, a guaranteed flow bit rate, a packet delay budget, a packet error rate, a guaranteed bit rate, or a guaranteed transmission data size.

25. A communication apparatus, wherein the communication apparatus comprises an interface module and a processing module, wherein

the interface module is configured to send information about a first session to a first network element in a core network, wherein the information about the first session indicates that the first session corresponds to a plurality of pieces of candidate quality of service configuration information;

the interface module is further configured to receive first indication information from a radio access network node; and

the processing module is configured to determine, based on the first indication information, a parameter related to target quality of service configuration information, wherein the target quality of service configuration information comprises a parameter related to power consumption of a terminal, and the target quality of service configuration information is comprised in the plurality of pieces of candidate quality of service configuration information.

26. The communication apparatus according to claim 25, wherein

the processing module is further configured to determine at least one of a task split point, a bit rate, a code rate, a frame rate, or a resolution that corresponds to the parameter related to the target quality of service configuration information.

27. The communication apparatus according to claim 25 or 26, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

28. A communication apparatus, wherein the communication apparatus comprises an interface module and a processing module, wherein

the interface module is configured to receive information about a first session from a terminal, wherein the information about the first session indicates that the first session corresponds to a plurality of pieces of candidate quality of service configuration information;

the processing module is configured to obtain the plurality of pieces of candidate quality of service configuration information, wherein any one of the plurality of pieces of candidate quality of service configuration information comprises a parameter related to power consumption of the terminal; and

the interface module is further configured to send the plurality of pieces of candidate quality of service configuration information to a radio access network node.

29. The communication apparatus according to claim 28, wherein the parameter related to the power consumption of the terminal comprises at least one of the following: computing power consumption of the terminal, total power consumption of the terminal, computing energy consumption of the terminal, total energy consumption of the terminal, or transmission power consumption of the terminal.

30. A communication apparatus, comprising a processor, wherein the processor is coupled to a memory, the memory is configured to store a program or instructions, and when the program or the instructions is/are executed by the processor, the apparatus is enabled to perform the method according to any one of claims 1 to 9, or perform the method according to any one of claims 10 to 16, or perform the method according to any one of claims 17 to 19.

31. A computer-readable storage medium, wherein the computer-readable storage medium stores a computer program or instructions, and when the computer program or instructions is/are executed, a computer is enabled to perform the method according to any one of claims 1 to 9, or the method according to any one of claims 10 to 16, or the method according to any one of claims 17 to 19.

32. A computer program product, wherein the computer program product comprises computer program code, and when the computer program code is run on a computer, the computer is enabled to implement the method according to any one of claims 1 to 9, or implement the method according to any one of claims 10 to 16, or implement the method according to any one of claims 17 to 19.

FIG. 1A

FIG. 1B

RAN node

nrt-RIC

CU

DU

FIG. 1C

RAN node

CU

DU

nrt-RIC

FIG. 1D

NSSF | NEF | NRF | PCF | UDM | AF

Nnssf | Nnef | Nnrf | Npcf | Nudm | Naf

Nausf | Namf | Nsmf

AUSF | AMF | SMF

N1 | N2 | N4

Terminal | (R)AN | N3 | UPF | N6 | DN

FIG. 1E

FIG. 1F

FIG. 1G

20

201

2011

2023

2022

202

Core
network

203

FIG. 2

30

Communication
line 302

301

Processor

CPU 0

CPU 1

307

Processor

CPU 0

CPU 1

303

Memory

304

Communication
interface

305

Output device

306

Input device

FIG. 3

| Terminal | RAN node | First network element | Computing node |
|---|---|---|---|

S401: Information about a first session

S402: Obtain a plurality of pieces of candidate QoS configuration information

S403: The plurality of pieces of candidate QoS configuration information

S404: Determine target QoS configuration information from the plurality of pieces of candidate QoS configuration information based on a current network status

S405: First indication information

S405: First indication information

FIG. 4

Communication apparatus 50

Interface module — 501

Processing module — 502

FIG. 5

## INTERNATIONAL SEARCH REPORT

| International application No. |
| --- |
| **PCT/CN2024/081498** |

**A. CLASSIFICATION OF SUBJECT MATTER**

H04W72/54(2023.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, OETXT, VEN, WPABS: 服务质量, 功耗, 简档, 能耗, 配置, configuration, consumption, energy, power, profile, QOS, Quality of Service

**C. DOCUMENTS CONSIDERED TO BE RELEVANT**

| Category* | Citation of document, with indication, where appropriate, of the relevant passages | Relevant to claim No. |
| --- | --- | --- |
| PX | WO 2024020759 A1 (BEIJING XIAOMI MOBILE SOFTWARE CO., LTD.) 01 February 2024 (2024-02-01)<br>description, paragraphs [0081]-[0144], and figure 2 | 1-32 |
| PX | WO 2024020760 A1 (BEIJING XIAOMI MOBILE SOFTWARE CO., LTD.) 01 February 2024 (2024-02-01)<br>description, paragraphs [0097]-[0159], and figure 2 | 1-32 |
| A | OPPO. "New solution: Provision of conditional QoS profile(s)"<br>*3GPP SA WG2 Meeting #150E, S2-2202272*, 12 April 2022 (2022-04-12),<br>pages 1-2 | 1-32 |
| A | US 2021289392 A1 (QUALCOMM INC.) 16 September 2021 (2021-09-16)<br>entire document | 1-32 |
| A | US 2017192479 A1 (ELECTRONICS AND TELECOMMUNICATIONS RESEARCH INSTITUTE) 06 July 2017 (2017-07-06)<br>entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 June 2024** | **13 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/081498**

| Patent document cited in search report | | | Publication date (day/month/year) | Patent family member(s) | | | Publication date (day/month/year) |
|---|---|---|---|---|---|---|---|
| WO | 2024020759 | A1 | 01 February 2024 | CN | 117769825 | A | 26 March 2024 |
| WO | 2024020760 | A1 | 01 February 2024 | CN | 117769853 | A | 26 March 2024 |
| US | 2021289392 | A1 | 16 September 2021 | EP | 4118928 | A1 | 18 January 2023 |
| | | | | WO | 2021183907 | A1 | 16 September 2021 |
| | | | | CN | 115280892 | A | 01 November 2022 |
| | | | | IN | 202247043510 | A | 16 September 2022 |
| US | 2017192479 | A1 | 06 July 2017 | KR | 20170081534 | A | 12 July 2017 |

Form PCT/ISA/210 (patent family annex) (July 2022)

**EP 4 668 997 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310293241